(19) Europäisches Patentamt
European Patent Office
Office européen des brevets

(11) **EP 2 497 800 A1**

(12) **EUROPEAN PATENT APPLICATION**
published in accordance with Art. 153(4) EPC


(43) Date of publication:
**12.09.2012 Bulletin 2012/37**

(21) Application number: **10828412.6**

(22) Date of filing: **05.11.2010**

(51) Int Cl.:
***C08L 69/00*** *(2006.01)* ***B29C 47/00*** *(2006.01)*
***C08K 5/42*** *(2006.01)* ***C08K 5/54*** *(2006.01)*
***B29K 69/00*** *(2006.01)*

(86) International application number:
**PCT/JP2010/070156**

(87) International publication number:
**WO 2011/055854 (12.05.2011 Gazette 2011/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.11.2009 JP 2009254079**
**08.04.2010 JP 2010089423**



(71) Applicant: **Teijin Chemicals, Ltd.**
**Chiyoda-ku**
**Tokyo 100-0013 (JP)**

(72) Inventors:
- **HIGAKI Yuji**
  **Tokyo 100-0013 (JP)**
- **ODA Takashi**
  **Tokyo 100-0013 (JP)**

(74) Representative: **Albrecht, Thomas**
**Kraus & Weisert**
**Patent- und Rechtsanwälte**
**Thomas-Wimmer-Ring 15**
**80539 München (DE)**


(54) **EXTRUSION-MOLDED ARTICLE COMPRISING AROMATIC POLYCARBONATE RESIN COMPOSITION**


(57) This invention seeks to provide an extrusion-molded product formed from a resin composition that contains an aromatic polycarbonate resin and is excellent in transparency, appearance and flame retardancy.

This invention is an extrusion-molded product formed from a resin composition comprising 100 parts by weight of an aromatic polycarbonate resin having a branched structure and a branching ratio of 0.7 to 1.5 mol% (component A) and 0.005 to 5 parts by weight of a flame retardant.


Fig. 1

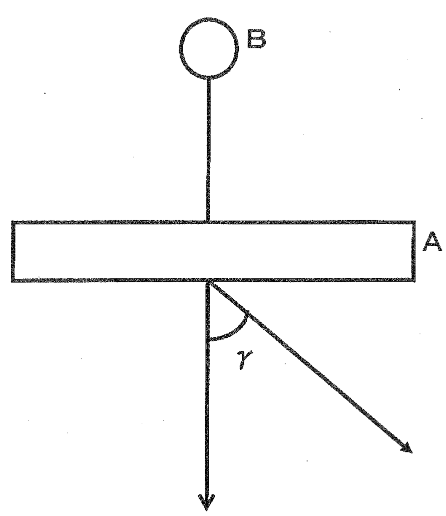


EP 2 497 800 A1

## Description

Technical Field

This invention relates to an extrusion-molded product from a resin composition containing an aromatic polycarbonate. More specifically, it relates to an extrusion-molded product that maintains high transparency and is also excellent in flame retardancy and appearance.

Background Art

An aromatic polycarbonate resin is used in broad fields of industry owing to simple and excellently productive processing methods such as injection molding and sheet extrusion molding methods. In the fields of various lighting covers and protective covers for transmissive displays where high transparency is required, an aromatic polycarbonate resin is widely used taking advantage of excellent transparency typified by a high light transmittance and a very low haze. Further, the fields of these products also involve the problem of a spreading fire of an acrylic resin, the spotlight of attention is hence focused upon flame retardancy in fire, and there are demanded extrusion-molded products that have advanced flame retardancy together with the above properties.

As a method of imparting an aromatic polycarbonate resin with flame retardancy, it has been conventionally proposed to add a bromine-based compound and a phosphorus-based compound, and it has been applied to office automation equipment and home electric appliances of which the flame-retarding is strongly requested. On the other hand, flame-retardant resin compositions as an alternative to these flame retardants have been developed and are coming to be used for the above commercial products. The purpose in the above flame-retardant replacements includes the inhibition of corrosive gas from occurring during molding and the recyclability of commercial products.

The flame retardant as an alternative to the above flame retardants includes a silicone compound. Resin compositions prepared by incorporating a silicone compound into an aromatic polycarbonate resin have been energetically studied, and various proposals have been made. For example, there is proposed a method in which perfluoroalkylsulfonic acid alkali (alkaline earth) metal salt and an organic siloxane having alkoxy, vinyl and phenyl groups are incorporated into a polycarbonate resin (see Patent Document 1). Further, there is proposed a method in which an alkali metal salt or alkaline earth metal salt of perfluoroalkylsulfonic acid and oroganopolysiloxane containing an organoxysilyl group bonded to a silicon atom through a divalent hydrocarbon group are incorporated into a polycarbonate resin (see Patent Document 2). Further, there is proposed a method in which specific petroleum heavy oils or pitches and a silicone compound are incorporated into a resin component (see Patent Document 3). Further, there is proposed a method in which a silicone resin having a unit of the formula $R_2SiO_{1.0}$ and a unit of the formula $RSiO_{1.5}$ (R is a hydrocarbon group) and having a weight average molecular weight of 10,000 or more but 270,000 or less is incorporated into a non-silicone resin having an aromatic ring (see Patent Document 4).

However, most of the above-proposed polycarbonate resins cannot be said to be sufficient in transparency and flame retardancy, for example, in that they fail to accomplish the V-0 rank of the UL standard 94 since they cause a dripping when they have a thin wall, that a molded product becomes cloudy since silicone is insufficiently dispersed, or that the transparency after treatment under heat and humidity is decreased since silicone is aggregated by the treatment under heat and humidity.

For inhibiting the dripping, it is effective to use polytetrafluoroethylene having fibril forming capability. When polytetrafluoroethylene is incorporated into an aromatic polycarbonate resin, however, there is a problem that the transparency of an extrusion-molded product is decreased since the polytetrafluoroethylene and the aromatic polycarbonate resin are incompatible.

There is also proposed a resin composition obtained by incorporating an organic alkali metal salt and poly (methylhydrogensiloxane) into an aromatic polycarbonate resin (see Patent Document 5). However, this resin composition cannot be said to be sufficient since it becomes opaque and causes a failure in dispersion such as a peeling on a molded article surface. There is also proposed a resin composition obtained by incorporating an organic alkali metal salt and poly(phenylmethylhydrogensiloxane) into an aromatic polycarbonate resin (see Patent Document 6). Further, a resin composition containing polycarbonate having a branched structure and an organic metal salt is proposed (Patent Document 7). There are also proposed resin compositions containing a polycarbonate having a branched structure, an organic metal salt and a specific siloxane compound (see Patent Documents 8 and 9).

These resin compositions have flame retardancy and transparency, while they are required to have further improvements in flame retardancy due to diversifying use of the resin compositions and a decrease in the thickness of commercial products. A diversity of polycarbonate resin compositions have been developed depending upon uses, and they are at various flame-retarding levels. It is required to improve the flame-retarding level of each material as much as possible. For example, if the minimum thickness of a test piece that can accomplish a material flame retardancy rank of V-0 can be decreased even by 0.1 mm with regard to the UL94 standard that is widely used as flame retardancy

indices of materials in electric use, such a material can be used for expanded applications as a flame-retarding material, and has very large effects. Further, even if the flame-retarding level is the same, but if the amount of a flame retardant to be used can be decreased in the least, it leads to the reduction of gas generated during processing, an improvement in processability, improved stability of a product quality and improvements in various physical properties. In particular, when an extrusion sheet or a forming extrusion sheet is extrusion-molded, there is a problem that a deposit adheres to a cooling roll due to a gas generated during processing to deteriorate the appearance of a sheet surface, and it is strongly desired to overcome the problem.

Prior Art Documents

Patent Document 1 JP-A 6-306265
Patent Document 2 JP-A 6-336547
Patent Document 3 JP-A 9-169914
Patent Document 4 JP-A 10-139964
Patent Document 5 JP-B 60-38419
Patent Document 6 JP-A 2003-147190
Patent Document 7 Japanese Patent No. 3129374
Patent Document 8 Japanese Patent No. 3163596
Patent Document 9 JP-A 2007-31583

Disclosure of the Invention

It is an object of the present invention to provide an extrusion-molded product formed from a resin composition that contains an aromatic polycarbonate resin and that is excellent in transparency, appearance and flame retardancy. It is another object of the present invention to provide an extrusion-molded product that maintains high light transmittance and diffusing capability and yet is excellent in flame retardancy.

For achieving the above objects, the present inventors have made diligent studies and as a result have found that there can be obtained an extrusion-molded product excellent in flame retardancy and excellent in transparency and appearance as well combining an aromatic polycarbonate resin having a specific branching ratio (component A) and a flame retardant. Further, it has been found that there can be obtained an extrusion-molded product that maintains a high light transmittance and diffusing capability and yet is excellent in flame retardancy and appearance by using a specific amount of a light diffusing agent in combination.

That is, according to the present invention, there is provided an extrusion-molded product formed from a resin composition containing 100 parts by weight of an aromatic polycarbonate resin having a branched structure and having a branching ratio of 0.7 to 1.5 mol% (component A) and 0.005 to 5 parts by weight of a flame retardant.

Brief Explanation of Drawings

Fig. 1 is a schematic drawing that shows a method of measuring a diffusivity in the present invention.

Explanation of Symbols

A: Test piece
B: Light source
$\gamma$: Diffusivity

Best Mode for Carrying Out the Invention

This invention will be specifically explained hereinafter.

<Component A: Aromatic polycarbonate resin>

An aromatic polycarbonate resin having a branched structure and having a branching ratio of 0.7 to 1.5 mol% (component A) refers to an aromatic polycarbonate resin having a branched structure (component A-1) or a mixture of the component A-1 with a linear aromatic polycarbonate resin (component A-2). The component A may contain an aromatic polycarbonate resin having a branched structure and having a branching ratio outside the range of 0.7 to 1.5 mol% so long as the branching ratio of the component A as a whole satisfies 0.7 to 1.5 mol%.

From the viewpoint that more excellent flame retardancy is imparted, the content of the component A-1 in the component A is preferably 20 % by weight to 100 % by weight, more preferably 70 % by weight to 100 % by weight, still more preferably 100 % by weight. The branching ratio of the component A as a whole is 0.7 to 1.5 mol%, preferably 0.7 to 1.3 mol%, more preferably 0.85 to 1.20 mol%. The branching ratio means a molar amount of a structural unit derived from a branching agent to a total molar amount of a structural unit derived from dihydric phenol used for production and contained in the entire resin (molar amount derived from branching agent/total molar amount of structural unit derived from dihydric phenol x 100 (represented by mol%)), and such a branching ratio can be actually measured by $^1$H-NMR measurement.

When the branching ratio is low, undesirably, no satisfactory branching property can be obtained, a melt tension is too low, it is difficult for the composition to exhibit the flame retardancy of an extrusion-molded product therefrom, in particular, the property of preventing a dripping, and further, extrusion-molding is difficult. When the branching ratio is high, a polymer undergoes a crosslinking to cause a gel, and the impact resistance of the polymer decrease. Further, when the branching ratio is too high, the surface of a molded product is liable to be cloudy, and there is involved a problem that molding conditions should be more finely adjusted like a cylinder temperature should be increased in order to overcome the above.

When the branching ratio of the component A is Z mol% and when the melt tension at 280˚C is Y, the relationship of Z and Y is preferably $3.8Z-2.4 \leq Y \leq 3.8Z+4.5$, more preferably $3.8Z-1.8 \leq Y \leq 3.8Z+3.9$. When $Y < 3.8Z-2.4$, a dripping is liable to occur in the flame retardancy test, and undesirably, there is a problem that no sufficient flame retardancy can be obtained. Further, when $Y > 3.8Z+4.5$, a melt tension is too high, a resin composition is poor in flowability and inferior in extrusion moldability, and undesirably, the surface state of an extrusion-molded product is degraded. The melt tension can be measured as a tension generated at a temperature of 280˚C, an extrusion temperature of 10 mm/minute, a tension speed of 157 mm/s and an orifice L/D of 8/2.1.

The viscosity average molecular weight of the component A is preferably in the range of $1.0 \times 10^4$ to $5.0 \times 10^4$, more preferably in the range of $1.6 \times 10^4$ to $3.0 \times 10^4$, still more preferably in the range of $1.8 \times 10^4$ to $2.8 \times 10^4$, the most preferably in the range of $1.9 \times 10^4$ to $2.6 \times 10^4$. When the molecular weight exceeds $5.0 \times 10^4$, a melt tension is sometimes high and moldability is poor. When the molecular weight is less than $1.0 \times 10^4$, the effect on the prevention of a dripping when an extrusion-molded product is combusted is insufficient, that is, the excellent flame retardancy in the present invention cannot be easily exhibited, and a melt tension is sometimes too low to carry out extrusion molding. Further, the aromatic polycarbonate resin (component A) may be a mixture with one or more aromatic polycarbonate resins having branched structures such that the molecular weight thereof satisfies the above preferred molecular weight range. In this case, naturally, a polycarbonate resin having a branched structure and having a viscosity average molecular weight outside the above preferred molecular weight range can be mixed.

With regard to the viscosity average molecular weight, first, a specific viscosity to be calculated by the following expression is obtained from a solution of 0.7 g of a polycarbonate resin in 100 ml of methylene chloride at 20˚C with an Ostwald viscometer,

$$\text{Specific viscosity } (\eta_{sp}) = (t-t_0)/t_0$$

in which $t_0$ is the number of seconds that methylene chloride takes to drop and t is the number of seconds that a sample solution takes to drop, and the obtained specific viscosity is inserted into the following expression to determine a viscosity average molecular weight (M),

$$\eta_{sp}/c = [\eta] + 0.45 \times [\eta]^2 c \text{ (in which } [\eta] \text{ is an intrinsic viscosity),}$$

$$[\eta] = 1.23 \times 10^{-4} M^{0.83}$$

$$c = 0.7$$

In the component A, the entire N (nitrogen) content in the resin is preferably 0 to 7 ppm, more preferably 0 to 5 ppm. The resin can be measured for an entire N (nitrogen) content by means of a trace nitrogen analyzer (chemiluminescence method) TN-10 model supplied by Mitsubishi Chemical Corporation.

Further, the entire Cl (chlorine) content is preferably 0 to 200 ppm, more preferably 0 to 150 ppm. When the entire N content in the aromatic polycarbonate resin (component A) having a branched structure exceeds 7 ppm or the entire Cl content therein exceeds 200 ppm, undesirably, thermal stability is degraded.

The aromatic polycarbonate resin having a branched structure (component A-1) can be obtained by an interfacial polymerization method that is carried out using a dihydric phenol, a branching agent, monohydric phenols and phosgene in the presence of an organic solvent.

Typical examples of the dihydric phenol used for obtaining the aromatic polycarbonate resin (component A-1) having a branched structure include 2,2-bis(4-hydroxyphenyl)propane (so-called bisphenol A), hydroquinone, resorcinol, 4,4'-biphenol, 1,1-bis(4-hydroxyphenyl)ethane, 2,2-bis(4-hydroxy-3-methylphenyl)propane, 2,2-bis(4-hydroxyphenyl) butane, 1,1-bis(4-hydroxyphenyl)-1-phenylethane, 1,1-bis(4-hydroxyphenyl)cyclohexane, 1,1-bis(4-hydroxyphenyl)-3,3,5-trimethylcyclohexane, 2,2-bis(4-hydroxyphenyl)pentane, 4,4'-(p-phenylenediisopropylidene)diphenol, 4,4'-(m-phenylenediisopropylidene)diphenol, 1,1-bis(4-hydroxyphenyl)-4-isopropylcyclohexane, bis(4-hydroxyphenyl)oxide, bis (4-hydroxyphenyl)sulfide and bis(4-hydroxyphenyl)sulfoxide. These may be used singly or in combination of the two or more of them. Of these, 2,2-bis(4-hydroxyphenyl)propane, i.e., bisphenol A is preferred.

Typical examples of the trihydric or higher phenols (branching agent) used in this invention include 1,1,1-tris (4-hydroxyphenyl)ethane, 4,6--dimethyl-2,4,6-tri(4-hydroxyphenyl)heptene-2,4,6-dimethyl-2,4,6-tri(4-hydroxyphenyl) heptane, 1,3,5-tri(4-hydroxyphenyl)benzene, 2,6-bis(2-hydroxy-5-methylbenzyl)-4-methylphenol, tetra(4-hydroxyphenyl)methane, trisphenol, bis(2,4-dihydroxyphenyl)ketone, phloroglucin, phloroglucide, isantin bisphenol, 1,4-bis(4,4-dihydroxytriphenylmethyl)benzene, trimellitic acid and pyromellitic acid. These may be used singly or in combination of the two or more of them. Of these, 1,1,1-tris(4-hydroxyphenyl)ethane is preferred. The branching ratio can be adjusted depending upon the amount of a branching agent.

The monohydric phenol (terminal stopper) used for producing the aromatic polycarbonate resin having a branched structure (component A-1) may have any structure and is not specially limited. For example, it includes p-tert-butylphenol, p-tert-octylphenol, p-cumylphenol, 4-hydroxybenzophenone and phenol. These may be used singly or in combination of the two or more of them. Of these, p-tert-butylphenol is preferred.

That is, in the aromatic polycarbonate resin having a branched structure (component A-1), preferably, the branched structure is a structure derived from 1,1,1-tris(4-hydroxyphenyl)ethane, the linear structure portion excluding the branched structure is a structure derived from bisphenol A, and the terminal is of a structure derived from p-tert-butylphenol.

The aromatic polycarbonate resin having a branched structure (component A-1) is suitably produced by the following method.

That is, it is a method which comprises blowing phosgene into an alkali aqueous solution containing a dihydric phenol compound and a branching agent dissolved therein, in the presence of an organic solvent, allowing them to react to obtain a polycarbonate oligomer, pouring monohydric phenols into the reaction mixture to emulsify it and then polymerizing them without stirring.

Further, as a reaction catalyst for promoting the reaction, for example, there can be used a catalyst including tertiary amines such as triethylamine, tributylamine, tetra-n-butylammonium bromide and tetra-n-butylphosphonium bromide, a quaternary ammonium compound and a quaternary phosphonium compound. The amount of the reaction catalyst based on the dihydric phenol compound is preferably 0.002 mol% or less, more preferably 0.001 mol% or less. In particular, the above reaction is preferably carried out in the absence of a catalyst. When the above amount exceeds 0.002 mol%, the melt tension relative to the branching agent amount may be too high, or a gel may be formed. Further, undesirably, the catalyst reacts with a chloroformate group to increase the amount of a urethane bond that is thermally unstable, and the entire N content in the branched polycarbonate resin is increased due to the remaining of the catalyst, to decrease the impact resistance, transparency and heat resistance. It is hence particularly preferred to carry out the above reaction in the absence of the catalyst. In this case, the normal reaction temperature is preferably 0 to 40˚C, more preferably 15 to 38˚C. The reaction time period is approximately 10 minutes to 5 hours, and the pH that maintains during the reaction is preferably 9.0 or more, more preferably 11.0 to 13.8.

The method of emulsification after the pouring of monohydric phenols in the above interfacial polymerizing reaction is not specially limited, while it includes a method of stirring with a stirrer and a method of adding an alkali aqueous solution. The stirrer includes simple stirrers such as a paddle, propeller, a turbine and an oar-shaped blade, high-speed stirrers such as a homogenizer, a mixer and a homomixer, and a static mixer, a colloid mill, an orifice mixer, a flow jet mixer and an ultrasonic emulsifier. Of these, a homomixer and a static mixer are preferably used in the method of polymerization in the absence of a catalyst.

Then, the organic solvent solution of an aromatic polycarbonate resin having a branched structure is washed, granulated and dried, whereby the branched polycarbonate resin (powder) of this invention can be obtained. Further, the above powder is melt-extruded and pelletized, whereby the branched polycarbonate resin (pellets) of this invention is obtained. The washing, granulating and drying are not specially limited, and known methods can be employed therefor.

For decreasing the entire Cl content in the aromatic polycarbonate resin (component A-1) having a branched structure, it is required to remove chlorinated hydrocarbon solvents used solvents in the reaction, such as dichloromethane (methylene chloride), dichloroethane, trichloroethane, tetrachloroethane, pentachloroethane, hexachloroethane, dichloroethane, chlorobenzene and dichlorobenzene. For example, the powder or pellets of the polycarbonate resin having a branched structure is/are fully dried.

Preferably, the aromatic polycarbonate resin having a branched structure (component A-1) is substantially free of a halogen atom. Being substantially free of a halogen atom means that its molecule does not contain any halogen-substituted dihydric phenol, etc., and it does not mean to include a trace amount of a solvent (halogenated hydrocarbon) and a carbonate precursor that remain in the method of producing the above aromatic polycarbonate.

The linear aromatic polycarbonate resin (component A-2) normally includes a linear aromatic polycarbonate resin obtained from a dihydric phenol and a carbonate precursor by a reaction according to an interfacial polycondensation method or a melt ester exchange method, and in addition to these, it also includes a linear aromatic polycarbonate resin obtained by polymerizing a carbonate prepolymer according to a solid phase ester exchange method and a linear aromatic polycarbonate resin obtained from a cyclic carbonate compound by a ring-opening polymerization method.

Typical examples of the dihydric phenol used herein include hydroquinone, resorcinol, 4,4'-dihydroxydiphenyl, bis(4-hydroxyphenyl)methane, bis{(4-hydroxy-3,5-dimethyl)phenyl}methane, 1,1-bis(4-hydroxyphenyl)ethane, 1,1-bis (4-hydroxyphenyl)-1-phenylethane, 2,2-bis(4-hydroxyphenyl)propane (so-called bisphenol A), 2,2-bis{ (4-hydroxy-3-methyl)phenyl}propane, 2,2-bis{(4-hydroxy-3,5-dimethyl)phenyl}propane, 2,2-bis{(3-isopropyl-4-hydroxy)phenyl}propane, 2,2-bis{(4-hydroxy-3-phenyl)phenyl}propane, 2,2-bis(4-hydroxyphenyl)butane, 2,2-bis(4-hydroxyphenyl)-3-methylbutane, 2,2-bis(4-hydroxyphenyl)-3,3-dimethylbutane, 2,4-bis(4-hydroxyphenyl)-2-methylbutane, 2,2-bis(4-hydroxyphenyl)pentane, 2,2-bis(4-hydroxyphenyl)-4-methylpentane, 1,1-bis(4-hydroxyphenyl)cyclohexane, 1,1-bis(4-hydroxyphenyl)4-isopropylcyclohexane, 1,1-bis(4-hydroxyphenyl)-3,3,5-trimethylcyclohexane, 9,9-bis(4-hydroxyphenyl)fluorene, 9,9-bis{(4-hydroxy-3-methyl)phenyl}fluorene, α,α'-bis(4-hydroxyphenyl)-o-diisopropylbenzene, α,α'-bis(4-hydroxyphenyl)-m-diisopropylbenzene, α,α'-bis(4-hydroxyphenyl)-p-diisopropylbenzene, 1,3-bis(4-hydroxyphenyl)-5,7-dimethyladamantane, 4,4'-dihydroxydiphenylsulfone, 4,4'-dihydroxydiphenylsulfoxide, 4,4'-dihydroxydiphenylsulfide, 4,4'-dihydroxydiphenylketone, 4,4'-dihydroxydiphenyl ether and 4,4'-dihydroxydiphenyl ester. These may be used singly or in combination of the two or more of them.

Of these, a homopolymer or copolymer obtained from at least one bisphenol selected from the group consisting of bisphenol A, 2,2-bis{(4-hydroxy-3-methyl)phenyl}propane, 2,2-bis(4-hydroxyphenyl)butane, 2,2-bis(4-hydroxyphenyl)-3-methylbutane, 2,2-bis(4-hydroxyphenyl)-3,3-dimethylbutane, 2,2-bis(4-hydroxyphenyl)-4-methylpentane, 1,1-bis (4-hydroxyphenyl)-3,3,5-trimethylcyclohexane and α,α'-bis(4-hydroxypheny)-m-diisopropylbenzene is preferred. In particular, a homopolymer of bisphenol A and a copolymer of 1,1-bis(4-hydroxyphenyl)-3,3,5-trimethylcyclohexane and a bisphenol A, 2,2-bis{(4-hydroxy-3-methyl)phenyl}propane or α,α'-bis (4-hydroxyphenyl)-m-diisopropylbenzene are preferably used. Of these, 2,2-bis(4-hydroxyphenyl)propane or bisphenol A is more preferred.

As the carbonate precursor, carbonyl halide, carbonate ester or haloformate is used. Specifically, it includes phosgene, diphenyl carbonate or dihaloformate of dihydric phenol, and of these, phosgene or diphenyl carbonate is industrially advantageous.

When the polycarbonate resin is produced from a dihydric phenol and a carbonate precursor by a reaction according to an interfacial polycondensation method or a melt ester exchange method, a catalyst, a terminal stopper and an antioxidant for dihydric phenols may be used as required. Further, it may be a mixture of two or more polycarbonate resins obtained.

The reaction according to an interfacial polycondensation method is normally a reaction between a dihydric phenol and phosgene, and the reaction is carried out in the presence of an acid binder and an organic solvent. As an acid binder, an alkali metal hydroxide such as sodium hydroxide or potassium hydroxide or an amine compound such as pyridine is used. As an organic solvent, hydrocarbon halide such as methylene chloride or chlorobenzene is used. For promoting the reaction, there can be also used a catalyst that includes tertiary amines such as triethylamine, tetra-n-butylammonium bromide and tetra-n-butylphosphonium bromide, a quaternary ammonium compound and a quaternary phosphonium compound. In this case, preferably, the reaction temperature is generally 0 to 40°C, the reaction time

period is approximately 10 minutes to 5 hours, and a pH of 9 or more is maintained during the reaction. In the above polymerizing reaction, generally, a terminal stopper (monohydric phenol) is used. The above terminal stopper can be selected from monofunctional phenols. Monofunctional phenols are generally used as a terminal stopper for adjusting a molecular weight, and the monofunctional phenols are phenols or lower-alkyl-group-substituted phenols, and include monofunctional phenols of the following formula (1).

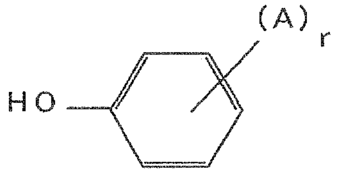

(1)

wherein A is a hydrogen atom, a linear or branched alkyl group having 1 to 9 carbon atoms or a phenyl-group-substituted alkyl group, and r is an integer of 1 to 5, preferably 1 to 3.

Specific examples of the above monofunctional phenols include phenol, p-tert-butylphenol, p-cumylphenol and isooctylphenol.

Further, as other monofunctional phenols, there are phenols or benzoic acid chlorides having a long-chain alkyl group or aliphatic polyester group as a substituent, or long-chain alkylcarboxylic acid chlorides. Of these, phenols having a long-chain alkyl group as a substituent, represented by the following formulae (2) and (3), are preferably used.

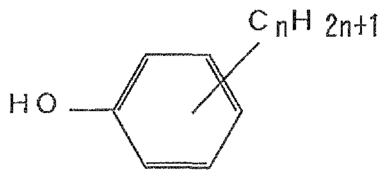

(2)

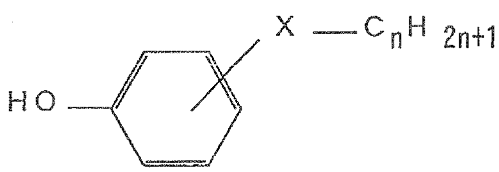

(3)

wherein X is -R-O-, -R-CO-O- or -R-O-CO-, in which R is a single bond or a divalent aliphatic hydrocarbon group having 1 to 10 carbon atoms, preferably 1 to 5 carbon atoms, and n is an integer of 10 to 50.

The substituted phenols of the above formula (2) are preferably phenols of the formula (2) in which n is 10 to 30, particularly preferably, 10 to 26, and specific examples of the above substituted phenol include decylphenol, dodecylphenol, tetradecylphenol, hexadecylphenol, octadecylphenol, eicosylphenol, docosylphenol and triacontylphenol.

The substituted phenols of the formula (3) are suitably phenols of the formula (3) in which X is -R-COO- and R is a single bond, and they are preferably the phenols of the formula (3) in which n is 10 to 30, particularly preferably, 10 to 26. Specific examples thereof include decyl hydroxybenzoate, dodecyl hydroxybenzoate, tetradecyl hydroxybenzoate, hexadecyl hydroxybenzoate, eicosyl hydroxybenzoate, docosyl hydroxybenzoate and triacontyl hydroxybenzoate. Further, the terminal stoppers may be used singly or as a mixture of the two or more of them.

The reaction according to a melt ester-exchange method is normally an ester-exchange reaction of dihydric phenol and carbonate ester, and it is carried out by a method in which dihydric phenol and carbonate ester are mixed under heat in the presence of an inert gas and a formed alcohol or phenol is distilled of. The reaction temperature differs depending upon the boiling points, etc., of the formed alcohol or phenol, while it is normally in the range of 120 to 350°C. At a later stage of the reaction, the system is pressure-reduced to approximately $1.33 \times 10^3$ to 13.3 Pa to make it easy to distill off the formed alcohol or phenol. The reaction time period is normally approximately 1 to 4 hours.

The carbonate ester includes esters of optionally substituted aryl group or aralkyl group having 6 to 10 carbon atoms or an alkyl group having 1 to 4 carbon atoms. Specifically, it includes diphenyl carbonate, bis(chlorophenyl) carbonate, dinaphthyl carbonate, bis(diphenyl) carbonate, dimethyl carbonate, diethyl carbonate and dibutyl carbonate. Of these, diphenyl carbonate is preferred.

For accelerating the polymerization speed, a polymerization catalyst can be used. As the above polymerization catalyst, there can be used catalysts that can be used for esterification reactions or ester-exchange reactions. Examples thereof include alkali metal compounds such as sodium hydroxide, potassium hydroxide and sodium salt or potassium

salt of dihydric phenol, alkaline earth metal compounds such as calcium hydroxide, barium hydroxide and magnesium hydroxide, nitrogen-containing basic compounds such as tetramethylammonium hydroxide, tetraethylammonium hydroxide, trimethylamine and triethylamine, alkoxides of alkali metals or alkaline earth metals, organic acid salts of alkali metals or alkaline earth metals, zinc compounds, boron compounds, aluminum compounds, silicon compounds, germanium compounds, organotin compounds, lead compounds, osmium compounds, antimony compounds, manganese compounds, titanium compounds and zirconium compounds. These catalysts may be used singly or in combination of the two or more of them. The amount of the catalyst per mole of the dihydric phenol as a raw material is preferably selected in the range of 1 x $10^{-8}$ to 1 x $10^{-3}$ equivalent weight, more preferably in the range of 1 x $10^{-7}$ to 5 x $10^{-4}$ equivalent weight.

For decreasing the amount of phenolic terminal groups in the above polymerizing reaction, further, compounds such as bis(chlorophenyl) carbonate, bis(bromophenyl) carbonate, bis(nitrophenyl) carbonate, bis(phenylphenyl) carbonate, chlorophenylphenyl carbonate, bromophenylphenyl carbonate, nitrophenylphenyl carbonate, phenylphenyl carbonate, methoxycarbonylphenylphenyl carbonate and ethoxycarbonylphenylphenyl carbonate may be added at a later stage of the reaction or after the end of the reaction. Of these, 2-chloropghenylphenyl carbonate, 2-methoxycarbonylphenylphenyl carbonate and 2-ethoxycarbonylphenylphenyl carbonate are preferred, and 2-methoxycarbonylphenylphenyl carbonate is particularly preferably used.

In the above polymerizing reaction, it is preferred to use a deactivator that neutralizes the activity of the catalyst. Specific examples of the deactivator include sulfonic esters such as benzene sulfonate, p-toluenesulfonic acid, methyl benzenesulfonate, ethyl benzenesulfonate, butyl benzenesulfonate, octyl benzenesulfonate, phenyl benzenesulfonate, methyl p-toluenesulfonate, ethyl p-toluenesulfonate, butyl p-toluenesulfonate, octyl p-toluenesulfonate and phenyl p-toluenesulfonate; and further include compounds such as trifluoromethanesulfonic acid, naphthalenesulfonic acid, sulfonated polystyrene, a methyl acrylate-sulfonated styrene copolymer, 2-phenyl-2-propyl dodecylbenzenesulfonate, 2-phenyl-2-butyl dodecylbenzenesulfonate, actylsulfonic acid tetrabutyl phosphonium salt, decylsulfonic acid tetrabutyl phosphonium salt, benzenesulfonic acid tetrabutyl phosphonium salt, dodecylbenzenesulfonic acid tetraethyl phosphonium salt, dodecylbenzenesulfonic acid tetrabutyl phosphonium salt, dodecylbenzenesulfonic acid tetrahexyl phosphonium salt, dodecylbenzenesulfonic acid tetraoctyl phosphonium salt, decylammonium butylsulfate, decylammonium decylsulfate, dodecylammonium methylsulfate, dodecylammonium ethylsulfate, dodecylmethylammonium methylsulfate, dodecylmethylammonium tetradecylsulfate, tetradecyldimethylammonium methylsulfate, tetramethylammonium hexylsulfate, decyltrimethylammonium hexadecylsulfate, tetrabutylammonium dodecylbenzylsulfate, tetraethylammonium dodecylbenzylsulfate, and tetramethylammonium dodecylbenzylsulfate, although the deactivator shall not be limited thereto. The two or more of these compounds may be used in combination.

Of these deactivators, phosphonium salt or ammonium salt type deactivators are preferred. The amount of the deactivator per mole of a remaining catalyst is preferably 0.5 to 50 mol, and the amount ratio thereof to the polycarbonate resin after the polymerization is preferably 0.01 to 500 ppm, more preferably 0.01 to 300 ppm, particularly preferably 0.01 to 100 ppm.

With regard to the molecular weight of the linear aromatic polycarbonate resin (component A-2), the aromatic polycarbonate resin having a viscosity average molecular weight of less than 1.0 x $10^4$ exhibits a decrease in high-temperature property, etc., and when the viscosity average molecular weight exceeds 5.0 x $10^4$, its moldability comes to decrease. The viscosity average molecular weight of the component A-2 is preferably 1.0 x $10^4$ to 5.0 x $10^4$, more preferably 1.6 x $10^4$ to 3.0 x $10^4$, still more preferably 1.8x $10^4$ to 2.8 x $10^4$, the most preferably 1.9 x $10^4$ to 2.6 x $10^4$. Further, a mixture of the two or more of the linear polycarbonate resins may be used without any problem. In this case, so long as the mixture of the two or more of them ultimately has a viscosity average molecular weight in a preferred range, naturally, the mixture may contain an aromatic polycarbonate resin having a viscosity average molecular weight outside the above range.

In particular, a mixture containing a polycarbonate resin having a viscosity average molecular weight of over 5.0 x $10^4$ is preferred since it has high capability of preventing dripping and further effectively exhibits the effect of this invention. A mixture containing a polycarbonate resin having a viscosity average molecular weight of 8.0 x $10^4$ or more is more preferred, and a mixture containing a polycarbonate resin having a viscosity average molecular weight of 10.0 x $10^4$ or more is still more preferred. That is, a mixture having a clear two peak distribution according to a method such as GPC (gel permeation chromatography) is preferred.

The linear aromatic polycarbonate resin (component A-2) is preferably an aromatic polycarbonate resin and substantially free of a halogen atom. Being substantially free of a halogen atom means that a molecule contains no halogen-substituted dihydric phenol, etc., and it does not mean to include a trace amount of a chlorine-based solvent and a carbonate precursor that remain in the method of producing the above aromatic polycarbonate.

<Flame retardant>

The resin composition of this invention contains 0.005 to 5 parts by weight of a flame retardant per 100 parts

by weight of the component A. The flame retardant is preferably at least one selected from a silicone compound having an aromatic group (component B) and an alkali (alkaline earth) metal salt (component C).

<Component B: Silicone compound>

The silicone compound having an aromatic group (component B) preferably has a viscosity, measured at 25˚C, of 300 cSt or less. With an increase in the viscosity, the transparency of a molded product is decreased. In order for the silicone compound as a component B to produce a flame retarding effect effectively, a dispersed state of the silicone compound in the process of combustion is important. A viscosity is an important factor that determines the above dispersed state. That is, when the silicone compound is too much volatile in the process of combustion, that is, when the viscosity of the silicone compound is too low, it is thought that since silicone tenuously remains in the system during the combustion, it is difficult to form a uniform silicone structure during the combustion. From the above viewpoint, the viscosity at 25˚C is more preferably 10 to 300 cSt, still more preferably 15 to 200 cSt, the most preferably 20 to 170 cSt.

The aromatic group that the component B has is bonded to a silicone atom, and it improves the compatibility with the polycarbonate resin and serves to maintain transparency. Since it is also advantageous for forming a carbonization coating during combustion, it also serves to exhibit a flame retarding effect. When the component B has no aromatic group, it is difficult to attain the transparency of a molded product, and it is also difficult to attain advanced flame retardancy.

The component B is preferably a silicone compound having Si-H group in its molecule. In particular, it is a silicone compound that has Si-H group and aromatic group in its molecule and that is selected from silicone compounds in which:

(i) the amount of Si-H group (Si-H amount) contained is 0.1 to 1.2 mol/100 g,
(ii) the amount ratio of an aromatic group represented by the following formula (4) (aromatic group amount) is 10 to 70 % by weight,

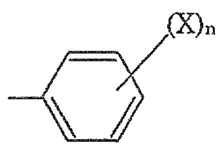

(4)

wherein X is, or each X is independently, OH group or a hydrocarbon group having 1 to 20 carbon atoms and optionally having a hetero-atom-containing functional group, and n is an integer of 0 to 5, provided that when n is 2 or more in the formula (4), each of X's may be different from other or every other one, and
(iii) the average polymerization degree is 3 to 150.

More preferably, it is at least one silicone compound selected from silicone compounds containing constituent units represented by at least one formula among constituent units represented by the following formulae (5) and (6).

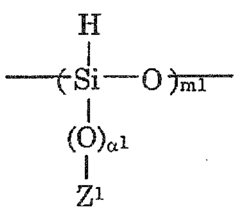

(5)

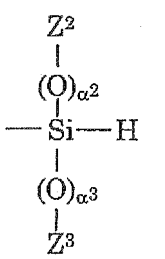

(6)

In the formulae (5) and (6), each of $Z^1$ to $Z^3$ is independently a hydrogen atom, a hydrocarbon group having 1 to 20 carbon atoms and optionally having a hetero-atom-containing functional group or a compound of the following formula (7), each of $\alpha 1$ to $\alpha 3$ is independently 0 or 1, and m1 is an integer of 0 or 1 or more, provided that m1 in the formula (5) is 2 or more, each recurring unit may be different from other or every other one.

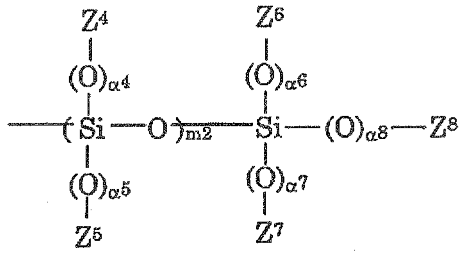
(7)

In the formula (7), each of $Z^4$ to $Z^8$ is independently a hydrogen atom or a hydrocarbon group having 1 to 20 carbon atoms and optionally having a hetero-atom-containing functional group, each of $\alpha 4$ to $\alpha 8$ is independently 0 or 1, and m2 is an integer of 0 or 1 or more, provided that m2 in the formula (7) is 2 or more, each recurring unit may be different from other or every other one.

More preferably, it is a silicone compound having MD units or MDT units in which M is a monofunctional siloxane unit, D is a difunctional siloxane unit and T is a trifunctional siloxane unit.

The hydrocarbon group having 1 to 20 carbon atoms and optionally having a hetero-atom-containing functional group, represented by the constituent units $Z^1$ to $Z^8$ in the above formulae (5), (6) and (7) and X in the above formula (4), includes alkyl groups such as methyl group, ethyl group, propyl group, butyl group, hexyl group and decyl group, cycloalkyl groups such as cyclohexyl group, alkenyl groups such as vinyl group and allyl group, aryl groups such as phenyl group and tolyl group, and aralkyl group. Further, these groups may contain various functional groups such as epoxy group, carboxyl group, carboxyl anhydride group, amino group and mercapto group. Further, it preferably includes an alkyl group having 1 to 8 carbon atoms, an alkenyl group or an aryl group, and in particular, it is preferably an alkyl group having 1 to 4 carbon atoms such as methyl group, ethyl group or propyl group, vinyl group or phenyl group.

When a silicone compound containing a constituent unit represented by at least one formula among constituent units of the above formulae (5) and (6) has a plurality of siloxane bond recurring units, they may have any form of a random copolymerization, a block copolymerization and a tapered copolymerization.

In the silicone compound having Si-H group which is preferred in this invention, the Si-H amount in the silicone compound is preferably in the range of 0.1 to 1.2 mol/100 g. When the Si-H amount is in the range of 0.1 to 1.2 mol/100g, a structure of silicone can be easily formed during combustion. The Si-H amount in the silicone compound is more preferably in the range of 0.1 to 1.0 mol/100 g, the most preferably in the range of 0.2 to 0.6 mol/g. When the Si-H amount is small, it is difficult to form a structure of silicone. When the Si-H amount is large, the thermal stability of the composition is decreased. The above structure of silicone refers to a network structure that is generated by a reaction between silicone compounds or a reaction between a resin and a silicone.

Further, the above Si-H amount refers to a molar amount of Si-H structure contained per 100 g of a silicone compound, and it can be determined by measuring the volume of a hydrogen gas that is generated per unit weight of a silicone compound by an alkali decomposition method. For example, when 122 ml of hydrogen gas per gram of a silicone compound is generated at 25°C, the Si-H amount comes to be 0.5 mol/100 g by the following calculating formula.

$$122 \times 273 / (273 + 25) \div 22400 \times 100 \fallingdotseq 0.5$$

In the resin composition obtained by incorporating a silicone compound into the aromatic polycarbonate resin (component A), the dispersed state of the silicone compound is important as described above for keeping a molded article from becoming cloudy or decreasing in transparency caused by wet and heat treatment. That is, when a silicone compound is eccentrically located, the resin composition per se becomes cloudy, and further, a peeling may take place on the surface of a molded product, or a silicone compound migrates and is located eccentrically during wet heat treatment to decrease the transparency. It is thus difficult to obtain a molded product excellent in transparency. The aromatic group amount in the silicone compound and average degree of polymerization are important factors that determine the above dispersed state. In particular, in the resin composition having transparency, the average degree of polymerization is important.

From the above viewpoint, in the silicone compound (component B), the aromatic group amount in the silicone

compound is preferably 10 to 70 % by weight. The aromatic group amount in the silicone compound is more preferably in the range of 15 to 60 % by weight, the most preferably in the range of 25 to 55 % by weight. When the aromatic group amount in the silicone compound is smaller than 10 % by weight, a silicone compound is eccentrically located and defectively dispersed, and it is sometimes difficult to obtain a molded product excellent in transparency. When the aromatic group amount is greater than 70 % by weight, the molecule of a silicone compound per se comes to have high stiffness and is rather eccentrically located to be defectively dispersed, so that it is sometimes difficult to obtain a molded product excellent in transparency.

The above aromatic group amount refers to an amount ratio of an aromatic group represented by the above formula (4) in the silicone compound, and can be determined according to the following calculating formula.

$$\text{Aromatic group amount} = [A/M] \times 100 \text{ (\% by weight)}$$

in which A and B represent the following numerical values.

A = Total molecular weight of all of aromatic group portions represented by the formula (4) and contained in one silicone compound molecule.
M = Molecular weight of the silicone compound

Further, the refractive index of the silicone compound (component B) at 25˚C is desirably in the range of 1.40 to 1.60. A silicone compound having a refractive index in the range of 1.42 to 1.59 is more preferred, and a silicone compound having a refractive index in the range of 1.44 to 1.59 is the most preferred. When the refractive index is in the above range, the silicone compound is finely dispersed in the aromatic polycarbonate, and there is hence provided a resin composition that is more free of cloudiness and excellent in dycability.

Further, the silicone compound (component B) suitably has a volatilization amount, measured by a heat loss method at 105˚C/3 hours, of 18 % or less. The volatilization amount is more preferably 10 % or less. When the volatilization amount is greater than 18 %, there is caused a problem that the amount of volatile components from the resin composition of this invention is increased when the resin composition is extruded and pelletized, and there is also caused a problem that more gas bubbles are liable to be generated in a molded product.

The silicone compound (component B) may be any silicone compound having a linear or branched structure so long as it satisfies the above conditions, and various compound having Si-H group in any one of a side chain, terminal and branching point of a molecular structure or Si-H groups in a plurality of sites can be used.

The structure of the silicone compound (component B) having Si-H group in its molecule is constituted by combining the following four kinds of siloxane units as required.

M units: Monofunctional siloxane units such as (CH3) $_3SiO_{1/2}$, H $(CH_3)$ $_2SiO_{1/2}$, $H_2$ $(CH_3)$ $SiO_{1/2}$, $(CH_3)$ $_2$ $(CH_2{=}CH)$ $SiO_{1/2}$, $(CH_3)$ $_2$ $(C_6H_5)$ $SiO_{1/2}$ and $(CH_3)$ $(C_6H_5)$ $(CH_2{=}CH)$ $SiO_{1/2}$.

D units: Difunctional siloxane units: $(CH_3)_2SiO$, H $(CH_3)$ SiO, $H_2SiO$, H $(C_6H_5)$ SiO, $(CH_3)$ $(CH_2{=}CH)$ SiO and $(C_6H_5)_2SiO$.

T units: Trifuncitonal siloxane units such as $(CH_3)SiO_{3/2}$, $(C_3H_7)SiO_{3/2}$, $HSiO_{3/2}$, $(CH_2{=}CH)SiO_{3/2}$ and $(C_6H_5)$ $SiO_{3/2}$.

Q unit: Tetrafunctional siloxane unit represented by $SiO_2$.

The structure of the silicone compound (component B) having Si-H group specifically includes $D_n$, $T_p$, $M_mD_n$, $M_mT_p$, $M_mQ_q$, $M_mD_nT_p$, $M_mD_nQ_q$, $M_nT_pQ_q$, $M_mD_nT_pQ_q$, $D_nT_p$, $D_nQ_q$ and $D_nT_pQ_q$ as rational formulae. Of these, the structure of the silicone compound is preferably $M_mD_p$, $M_mT_p$, $M_mD_nT_p$ or $M_mD_nQ_q$, more preferably $M_mD_n$ or $M_mD_nT_p$. (In the above rational formulae, each of the factors m, n, p and q is an integer that shows the polymerization degree of each siloxane unit. Further, when any one of m, n, p and q is an integer of 2 or more, the siloxane unit with such a factor added thereto may be formed of two or more siloxane units of hydrocarbon groups that independently have 1 to 20 carbon atoms and that may have a hydrogen atom or a heteroatom-containing functional group that bonds thereto.)

The total of the factors of each rational formula above represents an average degree of polymerization of the silicone compound of the rational formula. In this invention, the above average degree of polymerization is preferably in the range of 3 to 150, more preferably in the range of 4 to 80, still more preferably in the range of 5 to 60. When the polymerization degree is smaller than 3, the volatility of the silicone compound per se is high, and there is hence a problem that the amount of a volatile component from a resin composition containing such a silicone compound is liable to be large when the resin composition is processed. When the polymerization degree is larger than 150, the resin composition containing such a silicone compound is liable to be insufficient in flame retardancy and transparency.

The above silicone compounds may be used singly or in combination of the two or more of them.

The above silicone compound having Si-H group (component B) can be produced by a known conventional

method. For example, according to the structure of an intended silicone compound, corresponding organochlorosilanes are hydrolyzed together, and by-produced hydrochloric acid and low-boiling components are removed, whereby the intended product can be obtained. When a silicone oil having Si-H group, an aromatic group of the formula (4) or a hydrocarbon group having 1 to 20 carbon atoms and optionally having other hetero-atom-containing functional group, a cyclic siloxane or alkoxysilane are used as a starting material, a polymerizing reaction is proceeded with in the presence of an acid catalyst such as hydrochloric acid, sulfuric acid or methanesulfonic acid and by adding water for hydrolysis as required, and then the acid catalyst used and low-boiling components are removed, whereby an intended silicone compound can be obtained.

Further, the silicone compound having Si-H group (component B) has siloxane units represented by the following structural formulae M, $M^H$, D, $D^H$, $D^{\phi 2}$, T and $T^{\phi}$ (in which M: $(CH_3)_3SiO_{1/2}$, $M^H$: H $(CH_3)_2SiO_{1/2}$, D: $(CH_3)_2SiO$, DH: H $(CH_3)_2SiO$, $D^{\phi 2}$ : $(C_6H_5)_2Si$, T: $(CH_3)_2SiO_{3/2}$ and $T^{\phi}$: $(C_6H_5)$ $SiO_{3/2}$), and when average numbers of siloxane units per molecule are m, $m_h$, d, $d_h$, $d_{p2}$, t and $t_p$, preferably, all of the following relationships are satisfied.

$$2 \leqq m+m_h \leqq 40$$

$$0.35 \leqq d+d_h+d_{p2} \leqq 148$$

$$0 \leqq t+t_p \leqq 38$$

$$0.35 \leqq m_h+d_h \leqq 110$$

When any relationship is outside the above range, it is difficult to accomplish excellent flame retardancy and excellent transparency at the same time in the resin composition of this invention, and it is sometimes difficult to produce a silicone compound having Si-H group.

The content of the silicone compound (component B) per 100 parts by weight of the aromatic polycarbonate resin (component A) is 0.05 to 2.0 parts by weight, preferably 0.08 to 1.8 parts by weight, more preferably 0.1 to 1.5 parts by weight, the most preferably 0.3 to 1.2 parts by weight. When the above content is too large, there is a problem that the heat resistance of the resin is decreased or that the appearance of an extrusion-molded produce is degraded due to a gas generated during extrusion processing. When it is too small, there is a problem that the flame retardancy is not exhibited.

<Component C: Alkali metal (alkaline metal) salt>

The alkali (alkaline earth) metal salt (component C) can be selected from various metal salts that are used to render a polycarbonate resin flame-retardant. In particular, it includes perfluoroalkylsulfonic acid alkali (alkaline earth) metal salts, aromatic sulfonic acid alkali (alkaline earth) metal salts, alkali (alkaline earth) metal salts of aromatic imides, alkali (alkaline earth) metal salts of sulfuric esters, and alkali (alkaline earth) metal salts sulfuric acid partial esters.

The above alkali (alkaline earth) metal salt is used to mean both an alkali metal salt and an alkaline earth metal salt. These salts not only may be used singly, but also used as a mixture of the two or more of them. The metal for constituting the alkali (alkaline earth) metal salt is preferably an alkali metal or an alkaline earth metal, and it is more preferably an alkali metal. The alkali metal includes lithium, sodium, potassium, rubidium and cesium. The alkaline earth metal includes beryllium, magnesium, calcium, strontium and barium. Particularly preferred are lithium, sodium and potassium.

Examples of the perfluoroalkylsulfonic acid alkali (alkaline earth) metal salt preferably include perfluoromethanesulfonic acid salt, perfluoroethanesulfonic acid salt, perfluoropropanesulfonic acid salt, perfluorobutanesulfonic acid salt, perfluoromethylbutanesulfonic acid salt, perfluorohexanesulfonic acid salt, perfluoroheptanesulfonic acid salt and perfluorooctanesulfonic acid salt. In particular, perfluoroalkylsulfonic acid alkali (alkaline earth) metal salt having 1 to 8 carbon atoms is preferred. These may be used singly or in combination of the two or more of them.

Of these, perfluoroalkylsulfonic acid alkali metal salt is the most preferred. Of these alkali metals, rubidium and cesium are suitable when high flame retardancy is required. Since, however, they are not versatile and are hard to purify,

they are sometimes consequently disadvantageous in view of a cost. On the other hand, lithium and sodium are advantageous in view of a cost, while they are sometimes disadvantageous in respect of flame retardancy. Alkali metals in the perfluoroalkylsulfonic acid alkali metal salts can be selected by considering these, while perfluoroalkylsulfonic acid potassium salt, which is excellently well-balanced in properties in any point, is the most preferred. The above perfluoroalkylsulfonic acid potassium salt and a salt of perfluoroalkylsulfonic acid and other alkali metal can be also used in combination.

Specific examples of the perfluoroalkylsulfonic acid alkali metal salt include potassium trifluoromethanesulfonate, potassium perfluorobutanesulfonate, potassium perfluorohexanesulfonate, potassium perfluorooctanesulfonate, sodium perfluoroethanesulfonate, sodium perfluorobutanesulfonate, sodium perfluorooctanesulfonate, lithium trifluoromethanesulfonate, lithium perfluorobutanesulfonate, lithium perfluoroheptanesulfonate, cesium trifluoromethanesulfonate, cesium perfluorobutanesulfonate, cesium perfluorooctanesulfonate, cesium perfluorohexanesulfonate, rubidium perfluorobutanesulfonate, and rubidium perfluorohexanesulfonate. These can be used singly or in combination of the two or more of them. Of these, potassium perfluorobutanesulfonate is particularly preferred.

The aromatic sulfonic acid used in the aromatic sulfonic acid alkali (alkaline earth) metal salt includes at least one selected from the group consisting of sulfonic acid of aromatic sulfide in the form of a monomer or polymer, sulfonic acid of aromatic carboxylic acid and carboxylic ester, sulfonic acid of aromatic ester in the form of a monomer or polymer, sulfonic acid of aromatic sulfonate, aromatic sulfonic acid in the form of a monomer or polymer, aromatic sulfonesulfonic acid in the form of a monomer or polymer, sulfonic acid of aromatic ketone, heterocyclic sulfonic acid, sulfonic acid of aromatic sulfoxide and a condensate of an aromatic sulfonic acid by a methylene-type bond. These may be used singly or in combination of the two or more of them.

The sulfonic acid alkali (alkaline earth) metal salt of aromatic sulfide in the form of a monomer or polymer is described in JP-A 50-98539, and examples thereof include disodium diphenyl sulfide-4,4'-disulfonate and dipotassium diphenyl sulfide-4,4'-disulfonate.

The sulfonic acid alkali (alkaline earth) metal salt of aromatic carboxylic acid and ester is described in JP-A 50-98540, and examples thereof include potassium 5-sulfoisophthalate, sodium 5-sulfoisophthalate and polysodium polysulfonate of polyethylene terephthalate.

The sulfonic acid alkali (alkaline earth) metal salt of aromatic ether in the form of a monomer or polymer is described in JP-A 50-98542, and examples thereof include calcium 1-methoxynaphthalene-4-sulfonate, disodium 4-dodecylphenyl ether disulfonate, polysodium poly(2,6-dimethylphenylene oxide)polysulfonate, polysodium poly(1,3-phenylene oxide)polysulfonate, polysodium poly(1,4-phenylene oxide)polysulfonate, polypotassium poly(2,6-diphenylphenylene oxide)polysulfonate, and lithium poly(2-fluoro-6-butylphenylene oxide)polysulfonate.

The sulfonic acid alkali (alkaline earth) metal salt of aromatic sulfonate is described in JP-A 50-98544, and examples thereof include potassium sulfonate of benzene sulfonate.

The aromatic sulfonic acid alkali (alkaline earth) metal salt in the form of a monomer or polymer is described in JP-A 50-98546, and examples thereof include sodium benzenesulfonate, strontium benzenesulfonate, magnesium benzenesulfonate, dipotassium p-benzenedisulfonate, dipotassium naphthalene-2,6-disulfonate and calcium biphenyl-3,3'-disulfonate.

The aromatic sulfonesulfonic acid alkali (alkaline earth) metal salt in the form of a monomer or polymer is described in JP-A 52-54746, and examples thereof include sodium diphenylsulfone-3-sulfonate, potassium diphenylsulfone-3-sulfonate, dipotassium diphenylsulfone-3,3'-disulfonate and dipotassium diphenylsulfone-3,4'-disulfonate.

The sulfonic acid alkali (alkaline earth) metal salt of aromatic ketone is described in JP-A 50-98547, and examples thereof include sodium $\alpha,\alpha,\alpha$-trifluoroacetophenone-4-sulfonate and dipotassium benzophenone-3,3'-disulfonate.

The heterocyclic sulfonic acid alkali (alkaline earth) metal salt is described in JP-A 50-116542, and examples thereof include disodium thiophene-2,5-disulfonate, dipotassium thiophene-2,5-disulfonate, calcium thiophene-2,5-disulfonate and sodium benzothiophenesulfonate.

The sulfonic acid alkali (alkaline earth) metal salt of aromatic sulfoxide is described in JP-A 52-54745, and examples thereof include potassium diphenylsufoxide-4-sulfonate.

The condensate of an aromatic sulfonic acid alkali (alkaline earth) metal salt by a methylene-type bond includes a formalin condensate of sodium naphthalenesulfonate and a formalin condensate of sodium anthracenesulfonate.

The above alkali (alkaline earth) metal salt of sulfuric ester in particular includes alkali (alkaline earth) metal salts of sulfuric esters of monohydric and/or polyhydric alcohols. The above sulfuric esters of monohydric and/or polyhydric alcohols include methylsulfuric ester, ethylsuluric ester, laurylsulfuric ester, hexadecylsulfuric ester, sulfuric ester of polyoxyethylene alkylphenyl ether, mono-, di-, tri- and tetrasulfuric esters of pentaerythritol, sulfuric ester of lauric acid monoglyceride, sulfuric ester of palmitic acid monoglyceride, and sulfuric ester of stearic acid monoglyceride. Of these alkali (alkaline earth) metal salts of sulfuric esters, alkali (alkaline earth) metal salt of laurylsulfuric ester is preferred.

The above alkali (alkaline earth) metal salt of phosphoric partial ester specifically includes alkali (alkaline earth) metal salts of bis(2,6-dibromo-4-cumylphenyl)phosphoric acid, bis(4-cumylphenyl)phosphoric acid, bis(2,4,6-tribromophenyl)phosphoric acid, bis(2,4-dibromolphenyl)phosphoric acid, bis(4-bromophenyl)phosphoric acid, diphenylphosphoric acid and bis(4-tert-butylphenyl)phosphoric acid.

Examples of the above alkali (alkaline earth) metal salt of aromatic imide include alkali (alkaline earth) metal salts of saccharin, N-(p-tolylsulfonyl)-p-toluenesulfoneamide (in other words, di(p-toluenesulfone)imide), N-(N'-benzylaminocarbonyl)sulfanylimide, N-(phenylcarboxyl)sulfanylimide and bis(diphenylphosphoric acid)imide.

Of these, a preferred component includes at least one compound selected from the group consisting of perfluoroalkylsulfonic acid alkali (alkaline earth) metal salt and alkali (alkaline earth) metal salt of aromatic imide. Of these, at least one compound selected from the group consisting of potassium perfluorobutanesulfonate, sodium perfluorobutanesulfonate, sulfonic acid salt of diphenylsulfone represented by the formula (8), potassium salt of di(p-toluenesulfone) imide and sodium salt of di(p-toluenesulfone)imide is more preferred. Potassium perfluorobutanesulfonate is the most preferred.

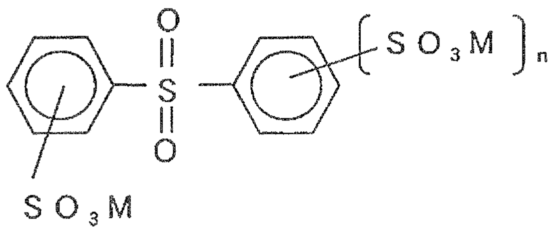

(8)

wherein n represents 0 to 3 and M represents K or Na.

The content of the component C in the resin composition of this invention per 100 parts by weight of the aromatic polycarbonate resin (component A) is preferably 0.005 to 1.0 part by weight, more preferably 0.006 to 0.3 part by weight, still more preferably 0.007 to 0.1 part by weight, yet more preferably 0.008 to 0.08 part by weight, the most preferably 0.01 to 0.06 part by weight. When the content of the component C is too large, not only the transparency characteristic of this invention is impaired, but also the resin is sometimes decomposed during extrusion molding to tend to decrease the flame retardancy. When the above content is too small, the flame retardancy is insufficient, and the flame retardancy as an object of this invention is not exhibited.

<Component D: Light diffusing agent>

The light diffusing agent (component D) may be any one of an agent formed of organic fine particles typified by polymer fine particles and an agent formed of inorganic fine particles. Typical examples of the polymer fine particles include organic crosslinked particles obtained by polymerization of a non-crosslinkable monomer and a crosslinkable monomer. Further, other copolymerizable monomer different from the above monomers can be also used. Further, as other organic crosslinked particles, there are silicone crosslinked particles typified by polyorganosilsesqueoxane.

Of these components D, polymer fine particles are preferred, and in particular, organic crosslinked particles can be suitably used. In these organic crosslinked particles, the monomer used as a non-crosslinkable monomer includes non-crosslinkable vinyl-based monomers such as an acrylic monomer, a styrene-based monomer and an acrylonitrile-based monomer, and olefin-based monomers.

The acrylic monomer includes methyl acrylate, ethyl acrylate, propyl acrylate, butyl acrylate, 2-ethylhexyl acrylate, methyl methacrylate, ethyl methacrylate, propyl methacrylate, butyl methacrylate, 2-ethylhexyl methacrylate and phenyl methacrylate. These may be used singly or as a mixture. Of these, methyl methacrylate is particularly preferred.

The styrene-based monomer can be selected from styrene, alkyl styrenes such as α-methylstyrene, methylstyrene (vinyl toluene) and ethylstyrene, and halogenated styrenes such as brominated styrene. Styrene is particularly preferred.

The acrylonitrile-based monomer can be selected from acrylonitrile and methacrylonitrile. The olefin-based monomer can be selected from ethylene and various norbornene type compounds.

Other copolymerizable monomer includes glycidyl methacrylate, N-methylmaleimide and anhydrous maleic acid. The organic crosslinked particles in this invention can also consequently have a unit like N-methylgultarimide.

The crosslinkable monomer that is used together with the above non-crosslinkable vinyl-based monomer includes divinylbenzene, allyl methacrylate, triallyl cyanurate, triallyl isocyanate, ethylene glycol di(meth)acrylate, diethylene glycol di(meth)acrylate, propylene glycol di(meth)acrylate, 1,6-hexanediol di(meth)acrylate, trimethylolpropane (meth)acrylate, pentaerythritol tetra(meth)acrylate, bisphenol A di(meth)acrylate, dicyclopentanyl di(meth)acrylate, dicyclopentenyl di(meth)acrylate and N-methylol (meth)acrylamide.

The average particle diameter of the light diffusing agent (component D) is preferably 0.01 to 50 μm, more preferably 1 to 30 μm, still more preferably 2 to 30 μm. When the average particle diameter is less than 0.01 μm or is

over 50 μm, the light diffusing capability is sometimes insufficient. The above average particle diameter is represented by a 50 % value (D50) of integration distribution of particle sizes determined by a laser diffraction-diffusing method. The distribution of the particle sizes may be of a single distribution or of a plurality of distributions. That is, two or more light diffusing agents having different average particle diameters may be combined. However, a light diffusing agent having a narrow particle size distribution is more preferred. A light diffusing agent containing 70 % by weight or more of particles having particle diameters in a range of ±2 μm of an average particle diameter is more preferred. The form of the light diffusing agent is preferably nearly spherical from the viewpoint of light diffusing capability, more preferably in the state of being close to spheres. The above form of spheres includes oval spheres.

The refractive index of the light diffusing agent (component D) is generally preferably in the range of 1.3 to 1.8, more preferably 1.33 to 1.70, still more preferably in the range of 1.35 to 1.65. These particles exhibit a sufficient light diffusing function in a state that they are incorporated into the resin composition.

In this invention, the content of the component D per 100 parts by weight of the aromatic polycarbonate resin (component A) is 0.005 to 3.0 parts by weight, preferably 0.05 to 3 parts by weight, more preferably 0.05 to 2 parts by weight. When the content of the component D is less than 0.005 part by weight, the light diffusing capability is insufficient. When it exceeds 3.0 parts by weight, the light transmittance is decreased.

The extrusion product containing the light diffusing agent (component D) in this invention is preferably an extrusion product formed of a resin composition containing

(A) 100 parts by weight of an aromatic polycarbonate resin (component A) having a branched structure and having a branching ratio of 0.70 to 1.50 mol%,
(B) 0.05 to 2.0 parts by weight of a silicone compound having an aromatic group (component B),
(C) 0.005 to 1.0 part by weight of an alkali (alkaline earth) metal salt (component C), and
(D) 0.005 to 3.0 parts by weight of a light diffusing agent (component D).

<Component E: Ultraviolet absorbent>

An ultraviolet absorbent (component E) is added for imparting light resistance. As the ultraviolet absorbent (component E), the benzophenone-containing ultraviolet absorbent includes 2,4-dihydroxybenzophenone, 2-hydroxy-4-methoxybenzophenone, 2-hydroxy-4-octoxybenzophenone, 2-hydroxy-4-benzyloxybenzophenone, 2-hydroxy-4-methoxy-5-sulfoxybenzophenone, 2-hydroxy-4-methoxy-5-sulfoxytrihydrideratebenzophenone, 2,2'-dihydroxy-4-methoxybenzophenone, 2,2,',4,4'-tetrahydroxybenzophenone, 2,2'-dihydroxy-4,4'-dimethoxybenzophenone, 2,2'-dihydroxy-4,4'-dimethoxy-5-sodiumsulfoxybenzophenone, bis(5-benzoyl-4-hydroxy-2-methoxyphenyl)methane, 2-hydroxy-4-n-dodecyloxybenzophenone and 2-hydroxy-4-methoxy-2'-carboxybenzophenone.

The benzotriazole-containing ultraviolet absorbent includes 2-(2-hydroxy-5-methylphenyl)benzotriazole, 2-(2-hydroxy-5-tert-octylphenyl)benzotriazole, 2-(2-hydroxy-3,5-dicumylphenyl)phenylbenzotriazole, 2-(2-hydroxy-3-tert-butyl-5-methyphenyl)-5-chlorobenzotriazole, 2,2'-methylenebis[4-(1,1,3,3-tetramethylbutyl)-6-(2H-benzotriazol-2-yl)phenol), 2-(2-hydroxy-3,5-di-tert-butylphenyl)benzotriazole, 2-(2-hydroxy-3,5-di-tert-butylphenyl)-5-chlorobenzotriazole, 2-(2-hydroxy-3,5-di-tert-amylphenyl)benzotriazole, 2-(2-hydroxy-5-tert-octylphenyl)benzotriazole, 2-(2-hydroxy-5-tert-butylphenyl)benzotriazole, 2-(2-hydroxy-4-octoxyphenyl)benzotriazole, 2,2'-methylenebis(4-cumyl-6-benzotriazolephenyl), 2,2'-p-phenylenebis(1,3-benzooxazin-4-one), 2-[2-hydroxy-3-(3,4,5,6-tetrahydrophthalimidomethyl)-5-methylphenyl]benzotriazole, and polymers having 2-hydroxyphenyl-2H-benzotrizaole framework such as a polymer of 2-(2'-hydroxy-5-methacryloxyethylphenyl)-2H-benzotriazole with a vinyl-based monomer copolymerizable with this monomer and a polymer of 2-(2'-hydorxy-5-acryloxyethylphenyl)-2H-benzotriazole with a vinyl-based monomer copolymerizable with this monomer.

The hydroxyphenyl triazine-containing ultraviolet absorbent includes 2-(4,6-diphenyl-1,3,5-triazin-2-yl)-5-hexyloxyphenol, 2-(4,6-diphenyl-1,3,5-triazin-2-yl)-5-methyloxyphenol, 2-(4,6-diphenyl-1,3,5-triazin-2-yl)-5-ethyloxyphenol, 2-(4,6-diphenyl-1,3,5-triazin-2-yl)-5-propyloxyphenol, and 2-(4,6-diphenyl-1,3,5-triazin-2-yl)-5-butyloxyphenol. Further, it also includes compounds formed by replacing the phenyl group of the above compounds shown as examples with 2,4-dimethylphenyl group such as 2-(4,6-bis(2,4-dimethylphenyl)-1,3,5-triazin-2-yl)-5-hexyloxyphenol, etc.

The cycloiminoester-containing ultraviolet absorbent includes 2,2'-p-phenylenebis(3,1-benzooxazin-4-one), 2,2'-m-phenylenebis(3,1-benzooxazin-4-one), and 2,2'-p,p'-diphenylenebis(3,1-benzooxazin-4-one).

The cyanoacrylate-containing ultraviolet absorbent includes 1,3-bis-[(2'-cyano-3',3'-diphenylacryloyl)oxy]-2,2-bis[(2-cyano-3,3-diphenylacryloyl)oxy]methylpropane and 1,3-bis-[(2-cyano-3,3-diphenylacryloyl)oxy]benzene.

Further, the ultraviolet absorbent (component E) may be an ultraviolet absorbent having the form of a polymer obtained by copolymerizing an ultraviolet absorbent monomer and/or light-stabilizing monomer which have/has a radical-polymerizable monomer compound structure with a monomer such as alkyl (meth)acrylate. The ultraviolet absorbent monomer suitably includes compounds having a benzotriazole structure, a benzophenone structure, a triazine structure, a cycloiminoester structure and a cyanoacrylate structure in ester substituents of (meth)acrylic esters.

Of the above ultraviolet absorbents, the benzotriazole-containing and hydroxyphenyl triazine-containing ultraviolet absorbents are preferred in respect of ultraviolet absorbing capability. The cycloiminoester-containing and cyanoacrylate-containing ultraviolet absorbents are preferred in respect of heat resistance and color hue. The above ultraviolet absorbents (component E) may be used singly or as a mixture of the two or more of them.
The content of the ultraviolet absorbent (component E) per 100 parts by weight of the component A is 0.01 to 3 parts by weight, more preferably 0.02 to 2 parts by weight, still more preferably 0.03 to 1 part by weight, the most preferably 0.05 to 0.5 part by weight.

<Component F: Fluorescent brightener>

The fluorescent brightener (component E) is not specially limited so long as it is used for improving the color tone of a resin such that it is white or bluish white. Examples thereof include stillbene-containing benzimidazole-containing, benzoxazole-containing, naphthalimide-containing, rhodamine-containing, coumarin-containing and oxazine-containing compounds. Specifically, it includes CI Fluorescent Brightener 219:1 and EASTOBRITE OB-1 supplied by Eastman Chemical Company. The above fluorescent brightener is that which absorbs the energy of ultraviolet region of light and emits the energy to a visible light region. The content of the fluorescent brightener (component F) per 100 parts by weight of the component A is preferably 0.001 to 0.1 part by weight, more preferably 0.001 to 0.05 part by weight. Even when the above content exceeds 0.1 part by weight, there is produced little effect on the improvement of color tone of the composition.

<Other components>

(I) Phosphorus-containing stabilizer

The resin composition of this invention preferably contains a phosphorus-containing stabilizer to such an extent that the hydrolyzability thereof is not promoted. The phosphorus-containing stabilizer improves the resin composition in thermal stability during producing or mold processing and improves it in mechanical properties, color hue and molding stability. The phosphorus-containing stabilizer includes, for example, phosphorous acids, phosphoric acids, phosphonous acids, phoshonic acids and esters of these, and tertiary phosphines.
Examples of the phosphite compounds include triphenyl phosphite, tris(nonylphenyl) phosphite, tridecyl phosphite, trioctyl phosphite, trioctadecyl phosphite, didecylmonophenyl phosphite, dioctylmonophenyl phosphite, diisopropylmonophenyl phosphite, monobutyldiphenyl phosphite, monodecyldiphenyl phosphite, monooctyldiphenyl phosphite, 2,2-methylenebis(4,6-di-tert-butylphenyl)octyl phosphite, tris(diethylphenyl) phosphite, tris(di-iso-propylphenyl) phosphite, tris(di-n-butylphenyl) phosphite, tris(2,4-di-tert-butylphenyl) phosphite, tris(2,6-di-tert-butylphenyl) phosphite, distearylpentaerythritol diphosphite, bis(2,4-di-tert-butylphenyl)pentaerythritol diphosphite, bis(2,6-di-tert-butyl-4-methylphenyl)pentaerythritol diphosphite, bis(2,6-di-tert-butyl-4-ethylphenyl)pentaerythritol diphosphite, phenylbisphenol A pentaerythritol diphosphite, bis(nonylphenyl)pentaerythritol diphosphite, and dicyclohexyl pentaerythritol diphosphite.
As other phosphite compounds, further, those which react with dihydric phenols and have cyclic structures can be also used. Examples thereof include 2,2'-methylenebis(4,6-di-tert-butylphenyl)(2,4-di-tert-butylphenyl) phosphite, 2,2'-methylenebis(4,6-di-tert-butylphenyl)(2-tert-butyl-4-methylphenyl) phosphite, 2,2'-methylenebis(4-methyl-6-tert-butylphenyl)(2-tert-butyl-4-methylphenyl) phosphite, and 2,2'-ethylidenebis(4-methyl-6-tert-butylphenyl)(2-tert-butyl-4-methylphenyl) phosphite.
The phosphate compounds include tributyl phosphate, trimethyl phosphate, tricresyl phosphate, triphenyl phosphate, trichlorophenyl phosphate, triethyl phosphate, diphenylcresyl phosphate, diphenyl monoorothoxenyl phosphate, tributoxyethyl phosphate, dibutyl phosphate, dioctyl phosphate, and diisopropyl phosphate. Of these, triphenyl phosphate and trimethyl phosphate are preferred.
The phosphonite compounds include tetrakis(2,4-di-tert-butylphenyl)-4,4'-biphenylenediphosphonite, tetrakis (2,4-di-tert-butylphenyl)-4,3'-biphenylenediphosphonite, tetrakis(2,4-di-tert-butylphenyl)-3,3'-biphenylenediphosphonite, tetrakis(2,6-di-tert-butylphenyl)-4,4'-biphenylenediphosphonite, tetrakis(2,6-di-tert-butylphenyl)-4,3'-biphenylenediphosphonite, tetrakis(2,6-di-tert-butylphenyl)-3,3'-biphenylenediphosphonite, bis(2,4-di-tert-butylphenyl)-4-phenyl-phenylphosphonite, bis(2,4-di-tert-butylphenyl)-3-phenyl-phenylphosphonite, bis(2,6-di-n-butylphenyl)-3-phenyl-phenylphosphonite, bis(2,6-di-tert-butylphenyl)-4-phenyl-phenylphosphonite, and bis(2,6-di-tert-butylphenyl)-3-phenyl-phenylphosphonite. Of these, tetrakis(di-tert-butylpheyl)-biphenylenediphosphonite and bis(di-tert-butylphenyl)-phenyl-phenylphosphonite are preferred, and tetrakis(2,4-di-tert-butylphenyl)-biphenylenediphosphonite and bis(2,4-di-tert-butylphenyl)-phenyl-phenylphosphonite are more preferred. The above phosphonite compound is preferred since it can be used in combination with a phosphite compound having an aryl group on which the two or more of the above alkyl groups are substituted.
The phosphonate compounds include dimethyl benzenephosphonate, diethyl benzenephosphonate and dipropyl benzenephosphonate.

Examples of the tertiary phosphines include triethylphosphine, tripropylphosphine, tributylphosphine, trioctylphosphine, triamylphosphine, dimethylphenylphosphine, dibutylphenylphosphine, diphenylmethylphosphine, diphenyloctylphosphine, triphenylphosphine, tri-p-tolylphosphine, trinaphthylphosphine and diphenylbenzylphosphine. The tertiary phosphine is particularly preferably triphenylphosphine.

The phosphorus-containing stabilizers may be used singly or as a mixture of the two or more of them. Of the above phosphorus-containing stabilizers, preferably, an alkylphosphate compound typified by trimethylphosphate is incorporated. In a preferred embodiment, further, the above alkylphosphate compound is used in combination with a phosphite compound and/or a phosphonite compound.

(II) Hindered phenol-containing stabilizer

The resin composition of this invention may further contain a hindered phenol-containing stabilizer. The hindered phenol-containing stabilizer inhibits the degradation of a color hue during mold processing and the degradation of a color hue in use for a long period of time. Examples of the hindered phenol-containing stabilizer include $\alpha$-tocopherol, butylhydroxytoluene, sinapyl alcohol, vitamin E, n-octadecyl-$\beta$-(4'-hydroxy-3',5'-di-tert-butylphenyl)propionate, 2-tert-butyl-6-(3'-tert-butyl-5'-methyl-2'-hydroxybenzyl)-4-methylphenyl acrylate, 2,6-di-tert-butyl-4-(N,N-dimethylaminomethyl)phenol, 3,5-di-tert-butyl-4-hydroxybenzylphosphonate diethyl ester, 2,2'-methylenebis(4-methyl-6-tert-butylphenol), 2,2'-methylenebis(4-ethyl-6-tert-butylphenol), 4,4'-methylenebis(2,6-di-tert-butylphenol), 2,2'-methylenebis(4-methyl-6-cyclohexylphenol), 2,2'-dimethylene-bis(6-$\alpha$-methyl-benzyl-p-cresol), 2,2'-ethylidene-bis(4,6-di-tert-butylphenol), 2,2'-butylidene-bis(4-methyl-6-tert-butylphenol), 4,4'-butylidene-bis(3-methyl-6-tert-butylphenol), triethylene glycol-N-bis-3-(3-tert-butyl-4-hydroxy-5-methylphenyl)propionate, 1,6-hexandediolbis[3-(3,5-di-tert-butyl-4-hydroxyphenyl)propionate], bis[2-tert-butyl-4-methyl-6-(3-tert-butyl-5-methyl-2-hydroxybenzyl)phenyl]terephthalate, 3,9-bis{2-[3-(3-tert-butyl-4-hydroxy-5-methylphenyl)propionyloxy]-1,1-dimethylethyl}-2,4,8,10-tetraoxaspiro[5,5]undecane, 4,4'-thiobis(6-tert-butyl-m-cresol), 4,4'-thiobis(3-methyl-6-tert-butylphenol), 2,2'-thiobis(4-methyl-6-tert-butylphenol), bis(3,5-di-tert-butyl-4-hydroxybenzyl)sulfide, 4,4'-di-thiobis(2,6-di-tert-butylphenol), 4,4'-tri-thiobis(2,6-di-tert-butylphenol), 2,2-thiodiethylenebis-[3-(3,5-di-tert-butyl-4-hydoxyphenyl)propionate], 2,4-bis(n-octylthio)-6-(4-hydroxy-3',5'-di-tert-butylanilino)-1,3,5-triazine, N,N'-hexamethylenebis-(3,5-di-tert-butyl-4-hydroxyhydrocinnamide), N,N'-bis[3-(3,5-di-tert-butyl-4-hydroxyphenyl)propionyl] hydrazine, 1,1,3-tris(2-methyl-4-hydroxy-5-tert-butylphenyl)butane, 1,3,5-trimethyl-2,4,6-tris(3,5-di-tert-butyl-4-hydroxybenzyl)benzene, tris(3,5-di-tert-butyl-4-hydroxyphenyl)isocyanurate, tris(3,5-di-tert-butyl-4-hydroxybenzyl)isocyanurate, 1,3,5-tris(4-tert-butyl-3-hydroxy-2,6-dimethylbenzyl)isocyanurate, 1,3,5-tris-2-[3-(3,5-di-tert-butyl-4-hydroxyphenyl)propionyloxy]ethyl isocyanurate, and tetrakis[methylene-3-(3',5'-di-tert-butyl-4-hydroxyphenyl)propionate]methane. Any one of these is easily available. The above hindered phenol-containing stabilizers may be used singly or in combination of the two or more of them.

The content of each of the phosphorus-containing stabilizer and the hindered phenol-containing stabilizer per 100 parts by weight of the component A is 0.005 to 0.5 part by weight, more preferably 0.01 to 0.5 part by weight, still more preferably 0.01 to 0.3 part by weight.

(III) Other thermal stabilizers

The resin composition of this invention can contain other thermal stabilizers different from the phosphorus-containing stabilizer and the hindered phenol-containing stabilizer. The above thermal stabilizer suitably includes lactone-containing stabilizers typified by a reaction product between 3-hydroxy-5,7-di-tert-butyl-furan-2-one and o-xylene. These stabilizers are described in detail in JP-A 7-233160. Such a compound is commercially sold as Irganox HP-136 (trade name, supplied by Ciba Specialty Chemicals), and this compound can be used. Further, stabilizers prepared by mixing the above compound with various phosphite compounds and hindered phenol compounds are commercially sold. For example, Irganox HP-2921 is illustrative of a suitable example. The lactone-containing stabilizer per 100 parts by weight of the component A is preferably 0.0005 to 0.05 part by weight, more preferably 0.001 to 0.03 part by weight.

Examples of other stabilizers include sulfur-containing stabilizers such as pentaerythritol tetrakis(3-mercaptopropionate), pentaerythritol tetrakis(3-laurylthiopropionate) and glycerol-3-stearylthiopropionate. The content of the above sulfur-containing stabilizer per 100 parts by weight of the component A is preferably 0.001 to 0.1 part by weight, more preferably 0.01 to 0.08 part by weight.

(IV) Dripping preventer

The resin composition of this invention is excellent in capability of preventing a dripping, while a dripping preventer can be used in combination for additionally enhancing the above capability. The content thereof per 100 parts

by weight of the component A is preferably 0.3 part by weight or less, more preferably 0.1 part by weight or less, still more preferably 0.05 part by weight or less, the most preferably 0.05 part by weight or less. The above dripping preventer includes a fluorine-containing polymer having the capability of forming fibrils. In particular, polytetrafluoroethylene (to be sometimes referred to as "PTFE" hereinafter) is preferred. "Impairing no transparency" means the use, for example, of PTFE in such an amount that the haze of a 2 mm thick plate does not exceed 5 %. PTFE having the capability of forming fibrils has a very high molecular weight, and tends to become fibrous by combining PTFE molecules due to an external action such as a shearing force. The molecular weight thereof, as a number average molecular weight determined on the basis of a standard specific gravity, is preferably 1,000,000 to 10,000,000, more preferably 2,000,000 to 9,000,000. The above PTFE not only in the form of a solid but also in the form of an aqueous dispersion can be used. Further, the PTFE having the capability of forming fibrils can be used in the form of a PTFE mixture with other resin for improving its dispersibility in a resin and obtaining further excellent flame retardancy and transparency. The PTFE commercial product in the form of a mixture includes "METABLEN A3000" (trade name), "METABLEN A3700" (trade name) and "METABLEN A3750" (trade name) supplied by Mitsubishi Rayon Co., Ltd., and "SN3307" (trade name) supplied by Shine Polymer and "N3305" (trade name) supplied by Shine Polymer.

(V) Others

The resin composition of this invention can contain small amounts of other thermoplastic resins and additives that are known per se for imparting a molded product with various functions and improving properties. These additives can be contained in ordinary amount in limits that do not impair the object of the present invention.

The above additives include colorants (pigments and dyes such as carbon black and titanium oxide), a fluorescent dye, a light stabilizer (typified by a hindered amine compound), an inorganic phosphor (phosphor containing aluminate as mother crystal), an antistatic agent, a crystal nucleating agent, inorganic and organic anti-fungus agents, a photocatalytic stain-proofing agent (e.g., titanium oxide fine particles and zinc oxide fine particles), a mold release agent, a flowability modifier, a radical generator, an infrared absorbent (heat-absorbing agent) and a photochromic agent.

Examples of the other thermoplastic resin include general-purpose plastics typified by a polyethylene resin, a polypropylene resin and a polyalkyl methacrylate resin, engineering plastics typified by a polyphenylene ether resin, a polyacetal resin, a polyamide resin, a cyclic polyolefin resin and a polyallylate resin (amorphous polyallylate and crystalline polyacrylate), and so-called super engineering plastics such as polyether ether ketone, polyetherimide, polysulfone, a polyether sulfone and polyphenylene sulfide. Further, thermoplastic elastomers such as an olefin-containing thermoplastic elastomer, a polyamide-containing thermoplastic elastomer and a polyurethane-containing thermoplastic elastomer can be used as well.

<Production of extrusion-molded product from resin composition>

Any method can be employed for producing an extrusion-molded product from the resin composition of this invention. For example, components are fully mixed with a pre-mixing means such as a V-blender, a Henschel mixer, a mechano-chemical apparatus or an extrusion mixer, then, a preliminary mixture is granulated with an extrusion granulator or a briquetting machine as required, and then granulation product is melt-extruded, whereby a sheet (including sheets of special shapes) can be produced.

As another method, there is employed a method in which components are independently fed to a melt kneader typified by a vented twin-screw kneader. There is also employed another method in which the component A and part of other components are pre-mixed, and the preliminary mixture is fed to a melt kneader independently of the other components. There is also employed a still another method in which the component B is diluted and mixed with water or an organic solvent and the diluted mixture is fed to a melt kneader, or the diluted mixture is pre-mixed with other components and the mixture is fed to a melt kneader. When a component in the form of a liquid is included in the components that are to be mixed, a so-called liquid-injecting apparatus or a liquid-adding apparatus can be used.

Further, a shaped sheet is produced by a method in which a melt-extruded sheet is processed with a shaping roll having a convex form or a V-letter form, and the shaped form is not specially limited.

Further, an extrusion-molded product obtained from the resin composition can be subjected to various surface treatments. The surface treatments include various coatings such as a decorative coating, a hard coating, a water-repellent or oil-repellent coating, a hydrophilic coating, an ultraviolet absorbent coating, an infrared absorbent coating, an electromagnetic wave absorbing coating, an exothermic coating, an antistatic coating, an electricity-control coating, an electrically conductive coating and metallizing (plating, chemical vapor deposition (CVD), physical vapor deposition (PVD) and spraying). In particular, the sheet or shaped sheet may be a laminated product in which a layer (transparent conductive layer) having, for example, a UV cut function, an antistatic capability, an IR cutting capability or an electromagnetic wave cutting capability is stacked on one surface and/or both surface thereof. The method of obtaining a laminated product includes a co-extrusion method or a method in which the melt-extrusion is followed by the thermocompression bonding of a laminate film or a transfer foil.

These extrusion products can be utilized in heat forming processes such as vacuum molding and air-pressure forming.

The extrusion-molded product can accomplish the flame retardancy level of V-0 in the UL 94 standard when it is a 1.5 mm thick molded product.

The extrusion-molded product includes an extrusion sheet, an extrusion shaped sheet and a profile extrusion sheet. These extrusion-molded products are suitably used in lighting covers and covers for transmissive displays.

Examples

Examples 1 to 30 and Comparative Examples 1 to 6

This invention will be further explained with reference to Examples hereinafter, while this invention shall not be limited thereto. In evaluations, the evaluations of the following items were carried out.

(i) Transparency

Plates each having a length of 150 mm, a width of 150 mm and a thickness of 1.5 mm were taken from sheets obtained from compositions in Examples, and each plate was measured for a haze according to JIS K7105. A plate having a haze of 2 % or less was taken as ○, a plate having a haze of less than 20 % was taken as Δ, and a plate having a haze of 20 % or more was taken as x.

(ii) Appearance of sheet

Sheets each having a width of approximately 10,000 mm, obtained from compositions in Examples were visually evaluated. A sheet having an excellent appearance was taken as O, and a sheet having an appearance that was degraded by gas during extrusion molding was taken as x.

(iii) Flame retardancy

Test pieces for evaluation of flame retardancy were prepared from sheets obtained from compositions in Examples. The test pieces having a thickness of 2.2 mm, 1.5 mm or 1.2 mm were subjected to a vertical combustion test according to the UL standard 94, and they were evaluated for a degree. A test piece which failed to satisfy any one of the evaluations V-0, V-1 and V-2 was shown as "not V".

(iv) Branching agent content in branched polycarbonate

A branching agent content in an aromatic polycarbonate resin was measured by $^{1}$H-NMR (JNM-AL400 supplied by JEOL).

Resin compositions having component amount ratios shown in Tables 1 to 3 were prepared by the following manner. Explanations are made according to symbols in the following Tables. In each Example, components in amounts shown in any one of Tables 1 to 3 were measured and uniformly mixed with a tumbler, and the mixture was melt-extruded with a vented T-die extruder at an extruder temperature of 270 to 320˚C and a die temperature of 290 to 320˚C in the form of a sheet having a width of approximately 1,000 mm and a thickness of 2.2 mm, 1.5 mm or 1.2 mm. Test pieces for the evaluation of flame retardancy and the evaluation of transparency were prepared from the thus-obtained sheets.

Examples 31 to 57 and Comparative Examples 7 to 15

Evaluations were made with regard to the following items.

(i) Flame retardancy

Test pieces for evaluation of flame retardancy were prepared from sheets obtained from compositions in Examples. The test pieces having a thickness of 2.2 mm and 1.5 mm were subjected to a vertical combustion test according to the UL standard 94, and they were evaluated for a degree. A test piece which failed to satisfy any one of the evaluations V-0, V-1 and V-2 was shown as "not V".

(ii) Optical properties

(1) Total light transmittance: Test pieces were prepared from sheets obtained from compositions in Examples. A test piece having a thickness of 2 mm was measured for a transmittance in the thickness direction with a hazemeter HR-100 supplied by Murakami color Research Laboratory according to JIS-K 7136.
(2) Diffuse light transmittance: Test pieces were prepared from sheets obtained from compositions in Examples. A flat plate-shaped test piece having sides of 150 mm each and a thickness of 2 mm was measured for a diffuse light transmittance in the thickness direction with a hazemeter HR-100 supplied by Murakami color Research Laboratory according to JIS-K 7136.
(3) Diffusivity: Test pieces were prepared from sheets obtained from compositions in Examples. A flat plate-shaped test piece having sides of 150 mm each and a thickness of 2 mm was measured for a diffusivity with a varied angle photometer supplied by Japan Color Research Institute. Fig. 1 shows a measurement method in this case. A diffusivity refers to an angle of $\gamma$ when the transmitted light amount of 100 at $\gamma = 0$ degree comes to be 50 in Fig. 1 in which light is vertically applied to the surface of a test piece from above.
(4) Surface emitting property: Test pieces were prepared from sheets obtained from compositions in Examples. A flat plate-shaped test piece having sides of 150 mm each and a thickness of 4 mm was stacked on an upper portion of a white reflector plate having sides of 150 mm each and a thickness of 2 mm, a cold cathode tube having a diameter of 3 mm and a length of 170 mm was set on the side surface of the test piece, and the test piece was visually evaluated for light-emitting capability. In the evaluation, a test piece of which the light-emitting surface was bright was taken as ○, a test piece of which the light-emitting surface was slightly dark was taken as Δ, and a test piece of which the light-emitting surface was dark was taken as x.

(iii) Appearance of sheet surface: Sheets having a width of approximately 1,000 mm, obtained from compositions in Examples, were visually evaluated. A sheet of which the appearance was good was taken as ○, and a sheet of which the appearance was degraded due to gas during extrusion molding was taken as x.

Resin compositions having component amount ratios shown in Tables 4 to 6 were prepared by the following manner. Explanations are made according to symbols in the following Tables. In each Example, components in amounts shown in any one of Tables were measured and uniformly mixed with a tumbler, and the mixture was melt-extruded with a vented T-die extruder at an extruder temperature of 270 to 320˚C and a die temperature of 290 to 320˚C in the form of a sheet having a width of approximately 1,000 mm and a thickness of 2.2 mm, 1.5 mm, 4 mm or 2 mm. Test pieces for the evaluation of flame retardancy and the evaluation of transparency were prepared from the thus-obtained sheets according to the above methods. Used raw materials, etc., described in Tables 1 to 6 are as follows.

(Component A)

(Component A-1)

PC-B9H: Aromatic polycarbonate resin having a branched structure (branching ratio 0.97 mol%, molecular weight 25,100)

(Method of producing PC-B9H)

A reactor with a thermometer, a stirrer and a reflux condenser was charged with 2,340 parts of deionized water, 947 parts of a 25 % sodium hydroxide aqueous solution and 0.7 part of hydrosulfite, and 710 parts of bisphenol A (bisphenol A solution) was dissolved therein with stirring. Then, 2,299 parts of methylene chloride, 112 parts of a 48.5 % sodium hydroxide aqueous solution and 38.1 parts (1.00 mol %) of an aqueous solution prepared by dissolving 1,1,1-tris(4-hydroxyphenyl)ethane in a concentration of 25 % in a 14 % sodium hydroxide aqueous solution were added, and 354 parts of phosgene was blown into the reaction mixture at 15 to 25˚C over approximately 90 minutes to carry out a phosgene-forming reaction.
After completion of the phosgene formation, 219 parts of a methylene chloride solution of p-tert-butylphenol having a concentration of 11 % and 88 parts of a 48.5 % sodium hydroxide aqueous solution were added, stirring was terminated, and the mixture was allowed to stand for 10 minutes for separation, followed by stirring to carry out emulsification. After 5 minutes, the emulsification product was treated with a homomixer (Tokushu Kika Kogyo K.K.) at a rotation speed of 1,200 rpm at a pass number of 35 times to give a highly emulsified dope. The above highly emulsified dope was allowed to react in a polymerizer (with stirrer) under stirring-free conditions at a temperature of 35˚C for 3

hours to complete the polymerization.

After completion of the reaction, 5,728 parts of methylene chloride was added to dilute the reaction mixture, then, a methylene chloride phase was separated from the reaction mixture solution, and 5,000 parts of deionized water was added to the separated methylene chloride phase, followed by stirring and mixing. Then, the stirring is terminated, and an aqueous phase and an organic phase were separated. Then, washing with water was repeated until the conductivity of the aqueous phase came to be almost the same as that of deionized water, to give a purified polycarbonate resin solution. Then, the above purified polycarbonate resin solution was poured into 100 L of deionized water in a 1,000 L kneader, and methylene chloride was volatilized at a liquid temperature of 75˚C to give a powder. 25 Parts of the above powder and 75 parts of water were charged into a hot water treatment vessel with a stirrer, and they were stirred and mixed at a water temperature of 95˚C for 30 minutes.

Then, the mixture of the above powder and water was centrifugally separated to give a powder containing 0.5 % by weight of methylene chloride and 45 % by weight of water. Then, the above powder was continuously supplied to a thermal conduction heating type grooved biaxial stirring continuous dryer having a controlled temperature of 140˚C, made of SUS316L, at a rate of 50 kg/hour (as a polycarbonate resin) under the conditions of an average drying time period of 3 hours to give a polycarbonate resin powder having a branched structure. The thus-obtained polycarbonate resin having branched structure had a viscosity average molecular weight of 25,100 and a branching ratio of 0.97 mol%.

PC-B9L: Aromatic polycarbonate resin having a branched structure (branching ratio 0.95 mol%, molecular weight 20,300)

(Method of producing PC-B9L)

A polycarbonate resin powder having a branched structure was obtained in the same manner as in the method of producing PC-B9H except that the amount of a methylene chloride solution of p-tert-butylphenol having a concentration of 11 % was changed to 261 parts. The thus-obtained polycarbonate resin having branched structure had a viscosity average molecular weight of 20,300 and a branching ratio of 0.95 mol%.

PC-B7: Aromatic polycarbonate resin having a branched structure (branching ratio 0.71 mol%, molecular weight 25,200)

(Method of producing PC-B7)

A polycarbonate resin powder having a branched structure was obtained in the same manner as in the method of producing PC-B9H except that the amount of phosgene was changed to 352 parts, that the amount of an aqueous solution prepared by dissolving 1,1,1-tris(4-hydroxyphenyl)ethane in a concentration of 25 % in a 14 % sodium hydroxide aqueous solution was changed to 28.6 parts (0.75 mol%) and that the amount of a methylene chloride solution of p-tert-butylphenol having a concentration of 11 % was changed to 209 parts. The thus-obtained polycarbonate resin having branched structure had a viscosity average molecular weight of 25,200 and a branching ratio of 0.71 mol%.

PC-B12: Aromatic polycarbonate resin having a branched structure (branching ratio 1.6 mol%, molecular weight 25,000)

(Method of producing PC-B12)

A polycarbonate resin powder having a branched structure was obtained in the same manner as in the method of producing PC-B9H except that the amount of phosgene was changed to 357 parts, that the amount of an aqueous solution prepared by dissolving 1,1,1-tris(4-hydroxyphenyl)ethane in a concentration of 25 % in a 14 % sodium hydroxide aqueous solution was changed to 64.7 parts (1.7 mol%) and that the amount of a methylene chloride solution of p-tert-butylphenol having a concentration of 11 % was changed to 245 parts. The thus-obtained polycarbonate resin having branched structure had a viscosity average molecular weight of 25,000 and a branching ratio of 1.6 mol%.

PC-B6: Aromatic polycarbonate resin having a branched structure (branching ratio 0.66 mol%, molecular weight approximately 25,200)

(Method of producing PC-B6)

A polycarbonate resin powder having a branched structure was obtained in the same manner as in the method of producing PC-B9H except that the amount of phosgene was changed to 352 parts, that the amount of an aqueous solution prepared by dissolving 1,1,1-tris(4-hydroxyphenyl)ethane in a concentration of 25 % in a 14 % sodium hydroxide aqueous solution was changed to 26.7 parts (0.70 mol%) and that the amount of a methylene chloride solution of p-tert-butylphenol having a concentration of 11 % was changed to 206 parts. The thus-obtained polycarbonate resin having branched structure had a viscosity average molecular weight of 25,200 and a branching ratio of 0.66 mol%.

PC-B2: Aromatic polycarbonate resin having a branched structure (branching ratio 0.28 mol%, molecular weight approximately 25,000)

(Method of producing PC-B2)

A polycarbonate resin powder having a branched structure was obtained in the same manner as in the method of producing PC-B9H except that the amount of phosgene was changed to 348 parts, that the amount of an aqueous solution prepared by dissolving 1,1,1-tris(4-hydroxyphenyl)ethane in a concentration of 25 % in a 14 % sodium hydroxide aqueous solution was changed to 10.7 parts (0.28 mol%) and that the amount of a methylene chloride solution of p-tert-butylphenol having a concentration of 11 % was changed to 160 parts. The thus-obtained polycarbonate resin having branched structure had a viscosity average molecular weight of 25,000 and a branching ratio of 0.28 mol%.

PC-B15H-a: Aromatic polycarbonate resin having a branched structure (branching ratio 1.52 mol%, molecular weight 24,800)

(Method of producing PC-B15H-a)

A reactor with a thermometer, a stirrer and a reflux condenser was charged with 2,340 parts of deionized water, 947 parts of a 25 % sodium hydroxide aqueous solution and 0.7 part of hydrosulfite, and 710 parts of bisphenol A (bisphenol A solution) was dissolved therein with stirring. Then, 2,299 parts of methylene chloride, 112 parts of a 48.5 % sodium hydroxide aqueous solution and 61.0 parts (1.60 mol %) of an aqueous solution prepared by dissolving 1,1,1-tris(4-hydroxyphenyl)ethane in a concentration of 25 % in a 14 % sodium hydroxide aqueous solution were added, and 357 parts of phosgene was blown into the reaction mixture at 15 to 25˚C over approximately 90 minutes to carry out a phosgene-forming reaction. After completion of the phosgene formation, 245 parts of a methylene chloride solution of p-tert-butylphenol having a concentration of 11 % and 88 parts of a 48.5 % sodium hydroxide aqueous solution were added, stirring was terminated, and the mixture was allowed to stand for 10 minutes for separation, followed by stirring to carry out emulsification. After 5 minutes, the emulsification product was treated with a homomixer (Tokushu Kika Kogyo K.K.) at a rotation speed of 1,200 rpm at a pass number of 35 times to give a highly emulsified dope. The above highly emulsified dope was allowed to react in a polymerizer (with stirrer) under stirring-free conditions at a temperature of 35˚C for 3 hours to complete the polymerization. After completion of the reaction, 5,728 parts of methylene chloride was added to dilute the reaction mixture, then, a methylene chloride phase was separated from the reaction mixture, and 5,000 parts of deionized water was added to the separated methylene chloride phase, followed by stirring and mixing. Then, the stirring is terminated, and an aqueous phase and an organic phase were separated. Then, washing with water was repeated until the conductivity of the aqueous phase came to be almost the same as that of deionized water, to give a purified polycarbonate resin solution. Then, the above purified polycarbonate resin solution was poured into 100 L of deionized water in a 1,000 L kneader, and methylene chloride was volatilized at a liquid temperature of 75˚C to give a powder. 25 Parts of the above powder and 75 parts of water were charged into a hot water treatment vessel with a stirrer, and they were stirred and mixed at a water temperature of 95˚C for 30 minutes. Then, the mixture of the above powder and water was centrifugally separated to give a powder containing 0.5 % by weight of methylene chloride and 45 % by weight of water. Then, the above powder was continuously supplied to a thermal conduction heating type grooved biaxial stirring continuous dryer having a controlled temperature of 140˚C, made of SUS316L, at a rate of 50 kg/hour (as a polycarbonate resin) under the conditions of an average drying time period of 3 hours to give a polycarbonate resin powder having a branched structure. The thus-obtained polycarbonate resin having branched structure had a viscosity average molecular weight of 24,800 and a branching ratio of 1.52 mol%.

PC-B14H-a: Aromatic polycarbonate resin having a branched structure (branching ratio 1.46 ml%, molecular weight 24,900)

(Method of producing PC-B14H-a)

A polycarbonate resin powder having a branched structure was obtained in the same manner as in the method of producing PC-B15H-a except that the amount of phosgene was changed to 357 parts, that the amount of an aqueous solution prepared by dissolving 1,1,1-tris(4-hydroxyphenyl)ethane in a concentration of 25 % in a 14 % sodium hydroxide aqueous solution was changed to 59.5 parts (1.56 mol%) and that the amount of a methylene chloride solution of p-tert-butylphenol having a concentration of 11 % was changed to 243 parts. The thus-obtained polycarbonate resin having branched structure had a viscosity average molecular weight of 24,900 and a branching ratio of 1.46 mol%.

PC-B14L-a: Aromatic polycarbonate resin having a branched structure (branching ratio 1.46 mol%, molecular weight 20,100)

(Method of producing PC-B14L-a)

A polycarbonate resin powder having a branched structure was obtained in the same manner as in the method of producing PC-B15H-a except that the amount of phosgene was changed to 359 parts, that the amount of an aqueous solution prepared by dissolving 1,1,1-tris(4-hydroxyphenyl)ethane in a concentration of 25 % in a 14 % sodium hydroxide aqueous solution was changed to 59.8 parts (1.57 mol%) and that the amount of a methylene chloride solution of p-tert-butylphenol having a concentration of 11 % was changed to 280 parts. The thus-obtained polycarbonate resin having branched structure had a viscosity average molecular weight of 20,100 and a branching ratio of 1.46 mol%.
PC-B12L-a: Aromatic polycarbonate resin having a branched structure (branching ratio 1.27 mol%, molecular weight 20,200)

(Method of producing PC-B12L-a)

A polycarbonate resin powder having a branched structure was obtained in the same manner as in the method of producing PC-B15H-a except that the amount of phosgene was changed to 358 parts, that the amount of an aqueous solution prepared by dissolving 1,1,1-tris(4-hydroxyphenyl)ethane in a concentration of 25 % in a 14 % sodium hydroxide aqueous solution was changed to 53.3 parts (1.40 mol%) and that the amount of a methylene chloride solution of p-tert-butylphenol having a concentration of 11 % was changed to 276 parts. The thus-obtained polycarbonate resin having branched structure had a viscosity average molecular weight of 20,200 and a branching ratio of 1.27 mol%.
PC-B9H-a: Aromatic polycarbonate resin having a branched structure (branching ratio 0.96 mol%, molecular weight 25,100)

(Method of producing PC-B9H-a)

A polycarbonate resin powder having a branched structure was obtained in the same manner as in the method of producing PC-B15H-a except that the amount of phosgene was changed to 354 parts, that the amount of an aqueous solution prepared by dissolving 1,1,1-tris(4-hydroxyphenyl)ethane in a concentration of 25 % in a 14 % sodium hydroxide aqueous solution was changed to 38.1 parts (1.00 mol%) and that the amount of a methylene chloride solution of p-tert-butylphenol having a concentration of 11 % was changed to 219 parts. The thus-obtained polycarbonate resin having branched structure had a viscosity average molecular weight of 25,100 and a branching ratio of 0.96 mol%.
PC-B9L-a: Aromatic polycarbonate resin having a branched structure (branching ratio 0.91 mol%, molecular weight 20,100)

(Method of producing PC-B9L-a)

A polycarbonate resin powder having a branched structure was obtained in the same manner as in the method of producing PC-B15H-a except that the amount of phosgene was changed to 355 parts, that the amount of an aqueous solution prepared by dissolving 1,1,1-tris(4-hydroxyphenyl)ethane in a concentration of 25 % in a 14 % sodium hydroxide aqueous solution was changed to 38.1 parts (1.00 mol%) and that the amount of a methylene chloride solution of p-tert-butylphenol having a concentration of 11 % was changed to 262 parts. The thus-obtained polycarbonate resin having branched structure had a viscosity average molecular weight of 20,100 and a branching ratio of 0.91 mol%.
PC-B7H-a: Aromatic polycarbonate resin having a branched structure (branching ratio 0.72 mol%, molecular weight 25,000)

(Method of producing PC-B7H-a)

A polycarbonate resin powder having a branched structure was obtained in the same manner as in the method of producing PC-B15H-a except that the amount of phosgene was changed to 352 parts, that the amount of an aqueous solution prepared by dissolving 1,1,1-tris(4-hydroxyphenyl)ethane in a concentration of 25 % in a 14 % sodium hydroxide aqueous solution was changed to 29.0 parts (0.76 mol%) and that the amount of a methylene chloride solution of p-tert-butylphenol having a concentration of 11 % was changed to 207 parts. The thus-obtained polycarbonate resin having branched structure had a viscosity average molecular weight of 25,000 and a branching ratio of 0.72 mol%.
PC-B7L-a: Aromatic polycarbonate resin having a branched structure (branching ratio 0.74 mol%, molecular weight 20,100)

(Method of producing PC-B7L-a)

A polycarbonate resin powder having a branched structure was obtained in the same manner as in the method

of producing PC-B15H-a except that the amount of phosgene was changed to 354 parts, that the amount of an aqueous solution prepared by dissolving 1,1,1-tris(4-hydroxyphenyl)ethane in a concentration of 25 % in a 14 % sodium hydroxide aqueous solution was changed to 30.5 parts (0.80 mol%) and that the amount of a methylene chloride solution of p-tert-butylphenol having a concentration of 11 % was changed to 253 parts. The thus-obtained polycarbonate resin having branched structure had a viscosity average molecular weight of 20,100 and a branching ratio of 0.74 mol%.

PC-B6H-a: Aromatic polycarbonate resin having a branched structure (branching ratio 0.67 mol%, molecular weight 25,100)

(Method of producing PC-B6H-a)

A polycarbonate resin powder having a branched structure was obtained in the same manner as in the method of producing PC-B15H-a except that the amount of phosgene was changed to 352 parts, that the amount of an aqueous solution prepared by dissolving 1,1,1-tris(4-hydroxyphenyl)ethane in a concentration of 25 % in a 14 % sodium hydroxide aqueous solution was changed to 27.1 parts (0.71 mol%) and that the amount of a methylene chloride solution of p-tert-butylphenol having a concentration of 11 % was changed to 205 parts. The thus-obtained polycarbonate resin having branched structure had a viscosity average molecular weight of 25,100 and a branching ratio of 0.67 mol%.

(Component A-2)

PC-L1: A linear polycarbonate resin (a polycarbonate resin containing bisphenol A and p-tert-butylphenol as a terminal stopper, produced by a phosgene method. The polycarbonate resin had a terminal hydroxy group content of 10 mol% in the terminal of an aromatic polycarbonate resin produced in the absence of an amine-containing catalyst and had a viscosity average molecular weight of 25,500.)

PC-L2: A linear polycarbonate resin (a polycarbonate resin containing bisphenol A and p-tert-butylphenol as a terminal stopper, produced by a phosgene method. The polycarbonate resin had a terminal hydroxy group content of 10 mol% in the terminal of an aromatic polycarbonate resin produced in the absence of an amine-containing catalyst and had a viscosity average molecular weight of 19,700.)

PC-L3: A linear polycarbonate resin (a polycarbonate resin containing bisphenol A and p-tert-butylphenol as a terminal stopper, produced by a phosgene method. The polycarbonate resin had a terminal hydroxy group content of 10 mol% in the terminal of an aromatic polycarbonate resin produced in the absence of an amine-containing catalyst and had a viscosity average molecular weight of 15,500.)

(Component C)

C-1: Perfluorobutanesulfonic acid potassium salt (MEGAFAC F-114P supplied by DIC Corporation)
C-2: Perfluorobutanesulfonic acid sodium salt (MEGAFAC F-114S supplied by DIC Corporation)
C-3: Potassium diphenylsulfonate (KSS supplied by UCB Japan K.K.)

(Component B)

B-1 : Silicone compound having Si-H group and aromatic group

(Production of B-1)

A 1L flask equipped with a stirrer, a cooling apparatus and a thermometer was charged with 301.9 g of water and 150 g of toluene, and they were cooled to an internal temperature of 5°C. A dropping funnel was charged with 21.7 g of trimethylchlorosilane, 23.0 g of methyldichlorosilane, 12.9 g of dimethyldichlorosilane and 76.0 g of diphenyldichlorosilane, and they were dropped into the flask with stirring over 2 hours. During this dropping, the cooling was continued so as to maintain the internal temperature at 20°C or lower. After completion of the dropping, the stirring was further continued at an internal temperature of 20°C for 4 hours for aging, then, the reaction mixture was allowed to stand, a separated hydrochloric acid layer was removed, a 10 % sodium carbonate aqueous solution was added, the mixture was stirred for 5 minutes, then, the reaction mixture was allowed to stand, and a separated aqueous layer was removed. Then, the reaction product was washed with deionized water three times, and it was confirmed that a toluene layer became neutral. This toluene solution was heated up to an internal temperature of 120°C under reduced pressure to

remove toluene and a low-boiling point component, and then an insoluble was removed by filtering to give a silicone compound B-1. The silicone compound B-1 had an Si-H group content of 0.21 mol/100 g and an aromatic group content of 49 % by weight and had an average polymerization degree of 8.0.

B-2: Silicone compound having Si-H group and aromatic group

(Production of B-2)

A 1L flask equipped with a stirrer, a cooling apparatus and a thermometer was charged with 100.7 g of 1,1,3,3-tetramethyldisiloxane, 60.1 g of 1,3,5,7-tetramethylcyclotetrasiloxane, 129.8 g of octamethylcyclotetrasiloxane, 143.8 g of octaphenylcyclotetrasiloxane and 99.1 g of phenyltrimethoxysilane, and while they were stirred, 25.0 g of concentrated sulfuric acid was added. The mixture was cooled to an internal temperature of 10˚C, and then 13.8 g of water was dropped into the flask with stirring over 30 minutes. During this dropping, the cooling was continued so as to maintain the internal temperature at 20˚C or lower. After completion of the dropping, the stirring was further continued at an internal temperature of 10 to 20˚C for 4 hours for aging, then, 8.5 g of water and 300 g of toluene were added, the mixture was stirred for 30 minutes, then the reaction mixture was allowed to stand, and a separated aqueous layer was removed. Then, the reaction product was washed with a 5 % sodium sulfate aqueous solution four times, and it was confirmed that a toluene layer became neutral. This toluene solution was heated up to an internal temperature of 120˚C under reduced pressure to remove toluene and a low-boiling point component, and then an insoluble was removed by filtering to give a silicone compound B-2. The silicone compound B-2 had an Si-H group content of 0.50 mol/100 g and an aromatic group content of 30 % by weight and had an average polymerization degree of 10.95.

B-3: Silicone compound having Si-H group and aromatic group

(Production of B-3)

A 1L flask equipped with a stirrer, a cooling apparatus and a thermometer was charged with 16.2 g of hexamethyldisiloxane, 61.0 g of 1,3,5,7-tetramethylcyclotetrasiloxane, 103.8 g of octamethylcyclotetrasiloxane and 391.0 g of diphenyldimethoxysilane, and while they were stirred, 25. 0 g of concentrated sulfuric acid was added. The mixture was cooled to an internal temperature of 10˚C, and then 29.4 g of water was dropped into the flask with stirring over 30 minutes. During this dropping, the cooling was continued so as to maintain the internal temperature at 20˚C or lower. After completion of the dropping, the stirring was further continued at an internal temperature of 10 to 20˚C for 5 hours for aging, then, 8.5 g of water and 300 g of toluene were added, the mixture was stirred for 30 minutes, then the reaction mixture was allowed to stand, and a separated aqueous layer was removed. Then, the reaction product was washed with a 5 % sodium sulfate aqueous solution four times, and it was confirmed that a toluene layer became neutral. This toluene solution was heated up to an internal temperature of 120˚C under reduced pressure to remove toluene and a low-boiling point component, and then an insoluble was removed by filtering to give a silicone compound B-3. The silicone compound B-3 had an Si-H group content of 0.20 mol/100 g and an aromatic group content of 50 % by weight and had an average polymerization degree of 42.0.

B-4: Silicone compound having Si-H group and aromatic group

(Production of B-4)

A 1L flask equipped with a stirrer, a cooling apparatus and a thermometer was charged with 15.9 g of hexamethyldisiloxane, 147.3 g of 1,3,5,7-tetramethylcyclotetrasiloxane, 14.5 g of octamethylcyclotetrasiloxane and 395.1 g of diphenyldimethoxysilane, and while they were stirred, 25.0 g of concentrated sulfuric acid was added. The mixture was cooled to an internal temperature of 10˚C, and then, 29.7 g of water was dropped into the flask with stirring over 30 minutes. During this dropping, the cooling was continued so as to maintain the internal temperature at 20˚C or lower. After completion of the dropping, the stirring was further continued at an internal temperature of 10 to 20˚C for 5 hours for aging, then, 8.5 g of water and 300 g of toluene were added, the mixture was stirred for 30 minutes, then the reaction mixture was allowed to stand, and a separated aqueous layer was removed. Then, the reaction product was washed with a 5 % sodium sulfate aqueous solution four times, and it was confirmed that a toluene layer became neutral. This toluene solution was heated up to an internal temperature of 120˚C under reduced pressure to remove toluene and a low-boiling point component, and then an insoluble was removed by filtering to give a silicone compound B-4. The silicone compound B-3 had an Si-H group content of 0.49 mol/100 g and an aromatic group content of 50 % by weight and had an average polymerization degree of 45.5.

<Rational formulae of the silicones>

B-1 : $M_2D^H{}_2D_1D^{\phi 2}{}_3$
B-2 : $M^H{}_3D^H{}_2D_{3.5}D^{\phi 2}{}_{1.45}T^{\phi}{}_1$
B-3: $M_2D^H{}_{10}D_{14}D^{\phi 2}{}_{16}$
B-4: $M_2D^H{}_{25}D_2D^{\phi 2}{}_{16.5}$

Symbols in the rational formulae stand for the following siloxane units, and factors (suffixes) to the symbols indicate the number (polymerization degree) of the siloxane units per molecule.

M : $(CH_3)_3SiO_{1/2}$
MH : $H(CH_3)_2SiO_{1/2}$
D : $(CH_3)_2SiO$
$D^H$ : $H(CH_3)SiO$
$D^{\phi 2}$ : $(C_6H_5)_2SiO$
$T^{\phi}$ : $(C_6H_5)SiO_{3/2}$

B-5: Silicone containing aromatic group (KF56 supplied by Shin-Etsu Chemical Co., Ltd.)
B-6: Silicone containing aromatic group (KR219 supplied by Shin-Etsu Chemical Co., Ltd.)

(Component D)

D-1: Beads-shaped crosslinked silicone (Tospearl 120 (trade name), supplied by Toshiba Silicone Co., Ltd.. average particle diameter 2 μm).
D-2: Beads-shaped crosslinked silicone (Tospearl 145 (trade name), supplied by Toshiba Silicone Co., Ltd.. average particle diameter 5 μm).
D-3: Beads-shaped crosslinked acryl particles (MBX-5 (trade name), supplied by Sekisui Plastics Co., Ltd., average particle diameter 5 μm).
D-4: Beads-shaped crosslinked acryl particles (MBX-30 (trade name), supplied by Sekisui Plastics Co., Ltd., average particle diameter 30 μm).

(Component E)

E-1: Benzotriazole-containing ultraviolet absorbent (CehmiSorb 79, supplied by Chemipro kasei Kaisha, Ltd.)

(Component F)

F-1: Fluorescent brightener (Hakkol PSR, supplied by Hakkor Chemical K.K.)

(Other components)

IRS: Phosphite compound (Irgafos 168, supplied by Ciba Specialty Chemicals)
IRX: Hindered phenol-containing antioxidant (Irganox 1076, supplied by Ciba Specialty Chemicals)
PEP: Pentaerythritol diphosphite compound (ADK Stab PEP-36, ADEKA Corporation)
TM: Trimethyl phosphate (TMP, supplied by Daihachi Chemical Industry Co., Ltd.)
VP: Fatty acid ester containing pentaerythritol tetrastearate as a main component (Loxiol VPG861, supplied by Cognis Japan K.K.)
UV: Ultraviolet absorbent (ChemiSorb 79, supplied by Chemipro kasei Kaisha Ltd.)

VB: Bluing agent (Macrolex Violet B, supplied by Bayer AG).
PEPQ: Tetrakis(di-tert-butylphenyl)-biphenylene diphosphonite (Standstab O-EPQ (trade name), supplied by Clariant Corporation)
L1: Saturated fatty acid ester-containing mold release agent (Rikemal SL-900, supplied by Riken Vitamin Co., Ltd.)
SN-3305: Dripping preventer (SN3305, supplied by Shine Polymer)

Table 1

| | | | Unit | Example 1 | Example 2 | Example 3 | Example 4 | Example 5 | Example 6 |
|---|---|---|---|---|---|---|---|---|---|
| Composition | Component A-1 | PC- B9H | pbw | 100 | 100 | 100 | 100 | 100 | 100 |
| | | PC- B9L | pbw | | | | | | |
| | | PC- B7 | pbw | | | | | | |
| | | PC- B12 | pbw | | | | | | |
| | | PC- B6 | pbw | | | | | | |
| | | PC- B2 | pbw | | | | | | |
| | Component A-2 | PC- L1 | pbw | | | | | | |
| | | PC- L2 | pbw | | | | | | |
| | | PC- L3 | pbw | | | | | | |
| | Total of components A | | pbw | 100 | 100 | 100 | 100 | 100 | 100 |
| | Branching ratio of component A | | mol% | 0.97 | 0.97 | 0.97 | 0.97 | 0.97 | 0.97 |
| | Component C | C-1 | mol% | 0.010 | 0.015 | 0.024 | 0.024 | 0.024 | 0.024 |
| | | C-2 | mol% | | | | | | |
| | | C-3 | mol% | | | | | | |
| | Component B | B-1 | mol% | 0.50 | 0.50 | 0.50 | | | |
| | | B-2 | mol% | | | | 0.50 | | |
| | | B-3 | mol% | | | | | 0.50 | |
| | | B-4 | mol% | | | | | | 0.50 |
| | | B-5 | mol% | | | | | | |
| | | B-6 | mol% | | | | | | |

pbw: parts by weight

Table 1 (continued)

| | | | Unit | Example 1 | Example 2 | Example 3 | Example 4 | Example 5 | Example 6 |
|---|---|---|---|---|---|---|---|---|---|
| Composition | Others | IRS | mol% | | | | | | |
| | | IRX | mol% | | | | | | |
| | | PEP | mol% | | | | | | |
| | | TM | mol% | | | | | | |
| | | UV | mol% | | | | | | |
| | | VB | mol% | | | | | | |
| Properties of material | Transparency | | | ○ | ○ | ○ | ○ | ○ | ○ |
| | Appearance | | | ○ | ○ | ○ | ○ | ○ | ○ |
| | Flame retardancey 2.2mmt | rank | - | V-0 | V-0 | V-0 | V-0 | V-0 | V-0 |
| | Flame retardancey 1.5mmt | rank | - | V-0 | V-0 | V-0 | V-0 | V-0 | V-0 |
| | Flame retardancey 1.2mmt | rank | - | V-1 | V-1 | V-1 | V-1 | V-1 | V-1 |

pbw: parts by weight

Table 1 (continued)

| | | | Unit | Example 7 | Example 8 | Example 9 | Example 10 | Example 11 | Example 12 |
|---|---|---|---|---|---|---|---|---|---|
| Composition | Component A-1 | PC- B9H | pbw | 100 | 100 | 100 | 100 | 100 | 100 |
| | | PC- B9L | pbw | | | | | | |
| | | PC- B7 | pbw | | | | | | |
| | | PC- B12 | pbw | | | | | | |
| | | PC- B6 | pbw | | | | | | |
| | | PC- B2 | pbw | | | | | | |
| | Component A-2 | PC- L1 | pbw | | | | | | |
| | | PC- L2 | pbw | | | | | | |
| | | PC- L3 | pbw | | | | | | |
| | Total of components A | | pbw | 100 | 100 | 100 | 100 | 100 | 100 |
| | Branching ratio of component A | | mol% | 0.97 | 0.97 | 0.97 | 0.97 | 0.97 | 0.97 |
| | Component C | C-1 | mol% | 0.024 | 0.05 | 0.05 | 0.05 | 0.05 | 0.08 |
| | | C-2 | mol% | | | | | | |
| | | C-3 | mol% | | | | | | |
| | Component B | B-1 | mol% | 1.00 | 0.10 | | | 0.50 | 1.00 |
| | | B-2 | mol% | | | | | | |
| | | B-3 | mol% | | | | | | |
| | | B-4 | mol% | | | | | | |
| | | B-5 | mol% | | | 0.10 | | | |
| | | B-6 | mol% | | | | 0.10 | | |

pbw: parts by weight

Table 1 (continued)

| | | | Unit | Example 7 | Example 8 | Example 9 | Example 10 | Example 11 | Example 12 |
|---|---|---|---|---|---|---|---|---|---|
| Composition | Others | IRS | mol% | | | | | | |
| | | IRX | mol% | | | | | | |
| | | PEP | mol% | | | | | | |
| | | TM | mol% | | | | | | |
| | | UV | mol% | | | | | | |
| | | VB | mol% | | | | | | |
| Properties of material | Transparency | | | ○ | ○ | ○ | ○ | ○ | ○ |
| | Appearance | | | ○ | ○ | ○ | ○ | ○ | ○ |
| | Flame retardancey 2.2mmt | rank | - | V-0 | V-0 | V-0 | V-0 | V-0 | V-0 |
| | Flame retardancey 1.5mmt | rank | - | V-0 | V-0 | V-0 | V-0 | V-0 | V-0 |
| | Flame retardancey 1.2mmt | rank | — | V-0 | V-0 | V-0 | V-1 | V-0 | V-0 |

Table 2

| | | | Unit | Example 13 | Example 14 | Example 15 | Example 16 | Example 17 |
|---|---|---|---|---|---|---|---|---|
| Composition | Component A-1 | PC- B9H | pbw | | | 100 | 100 | 100 |
| | | PC- B9L | pbw | 100 | | | | |
| | | PC- B7 | pbw | | 100 | | | |
| | | PC- B12 | pbw | | | | | |
| | | PC- B6 | pbw | | | | | |
| | | PC- B2 | pbw | | | | | |
| | Component A-2 | PC- L1 | pbw | | | | | |
| | | PC- L2 | pbw | | | | | |
| | | PC- L3 | pbw | | | | | |
| | Total of components A | | pbw | 100 | 100 | 100 | 100 | 100 |
| | Branching ratio of component A | | mol% | 0.95 | 0.71 | 0.97 | 0.97 | 0.97 |
| | Component C | C-1 | mol% | 0.10 | 0.024 | 0.005 | 0.05 | |
| | | C-2 | mol% | | | | | |
| | | C-3 | mol% | | | | | |
| | Component B | B-1 | mol% | 1.00 | 1.00 | | | 1.00 |
| | | B-2 | mol% | | | | | |
| | | B-3 | mol% | | | | | |
| | | B-4 | mol% | | | | | |
| | | B-5 | mol% | | | | | |
| | | B-6 | mol% | | | | | |

pbw: parts by weight

Table 2 (continued)

| | | | Unit | Example 13 | Example 14 | Example 15 | Example 16 | Example 17 |
|---|---|---|---|---|---|---|---|---|
| Composition | Others | IRS | mol% | | | | | |
| | | IRX | mol% | | | | | |
| | | PEP | mol% | | | | | |
| | | TM | mol% | | | | | |
| | | UV | mol% | | | | | |
| | | VB | mol% | | | | | |
| Properties of material | Transparency | | | ○ | ○ | ○ | ○ | ○ |
| | Appearance | | | ○ | ○ | ○ | ○ | ○ |
| | Flame retardancey 2.2mmt | rank | - | V-0 | V-0 | V-0 | V-0 | V-0 |
| | Flame retardancey 1.5mmt | rank | - | V-0 | V-0 | V-2 | V-1 | V-2 |
| | Flame retardancey 1.2mmt | rank | - | V-0 | V-0 | V-2 | V-2 | V-2 |

Table 2 (continued)

| | | | Unit | C.Ex.1 | C.Ex.2 | C.Ex.3 | C.Ex.4 | C.Ex.5 | C.Ex.6 |
|---|---|---|---|---|---|---|---|---|---|
| Composition | Component A-1 | PC- B9H | pbw | 100 | 100 | 100 | | | |
| | | PC- B9L | pbw | | | | | | |
| | | PC- B7 | pbw | | | | | | |
| | | PC- B12 | pbw | | | | 100 | | |
| | | PC- B6 | pbw | | | | | 100 | |
| | | PC- B2 | pbw | | | | | | 100 |
| | Component A-2 | PC- L1 | pbw | | | | | | |
| | | PC- L2 | pbw | | | | | | |
| | | PC- L3 | pbw | | | | | | |
| | Total of components A | | pbw | 100 | 100 | 100 | 100 | 100 | 100 |
| | Branching ratio of component A | | mol% | 0.97 | 0.97 | 0.97 | 1.6 | 0.66 | 0.28 |
| | Component C | C-1 | mol% | 0.004 | | 0.024 | 0.024 | 0.024 | 0.024 |
| | | C-2 | mol% | | | | | | |
| | | C-3 | mol% | | | | | | |
| | Component B | B-1 | mol% | | 0.004 | 5.00 | 1.00 | 1.00 | 0.50 |
| | | B-2 | mol% | | | | | | |
| | | B-3 | mol% | | | | | | |
| | | B-4 | mol% | | | | | | |
| | | B-5 | mol% | | | | | | |
| | | B-6 | mol% | | | | | | |

C.Ex.: Comparative Example pbw: parts by weight

Table 2 (continued)

| | | | Unit | C.Ex.1 | C.Ex.2 | C.Ex.3 | C.Ex.4 | C.Ex.5 | C.Ex.6 |
|---|---|---|---|---|---|---|---|---|---|
| Composition | Others | IRS | mol% | | | | | | |
| | | IRX | mol% | | | | | | |
| | | PEP | mol% | | | | | | |
| | | TM | mol% | | | | | | |
| | | UV | mol% | | | | | | |
| | | VB | mol% | | | | | | |
| Properties of materials | Transparency | | | ○ | ○ | × | × | ○ | ○ |
| | Appearance | | | ○ | ○ | × | × | ○ | ○ |
| | Flame retardancey 2.2mmt | rank | - | V-2 | V-2 | V-2 | V-0 | V-0 | V-2 |
| | Flame retardancey 1.5mmt | rank | - | V-2 | V-2 | V-2 | V-0 | V-0 | V-2 |
| | Flame retardancey 1.2mmt | rank | - | V-2 | V-2 | V-2 | V-0 | V-2 | V-2 |

C.Ex.: Comparative Example

Table 3

| | | | Unit | Ex.18 | Ex.19 | Ex.20 | Ex.21 | Ex.22 | Ex.23 | Ex.24 |
|---|---|---|---|---|---|---|---|---|---|---|
| Composition | Component A-1 | PC- B9H | pbw | 80 | 80 | 80 | | | 100 | 100 |
| | | PC- B9L | pbw | | | | 100 | 100 | | |
| | | PC- B7 | pbw | | | | | | | |
| | | PC- B12 | pbw | | | | | | | |
| | | PC- B6 | pbw | | | | | | | |
| | | PC- B2 | pbw | | | | | | | |
| | Component A-2 | PC- L1 | pbw | 20 | | | | | | |
| | | PC- L2 | pbw | | 20 | | | | | |
| | | PC- L3 | pbw | | | 20 | | | | |
| | Total of components A | | pbw | 100 | 100 | 100 | 100 | 100 | 100 | 100 |
| | Branching ratio of component A | | mol% | 0.78 | 0.78 | 0.78 | 0.95 | 0.95 | 0.97 | 0.97 |
| | Component C | C-1 | mol% | 0.024 | 0.024 | 0.024 | 0.024 | | | 0.024 |
| | | C-2 | mol% | | | | | 0.050 | | |
| | | C-3 | mol% | | | | | | 0.050 | |
| | Component B | B-1 | mol% | 1.00 | 1.00 | 1.00 | 2.00 | | | |
| | | B-2 | mol% | | | | | 2.00 | 1.00 | 1.00 |
| | | B-3 | mol% | | | | | | | |
| | | B-4 | mol% | | | | | | | |
| | | B-5 | mol% | | | | | | | |
| | | B-6 | mol% | | | | | | | |

Ex.: Example pbw: parts by weight

Table 3 (continued)

| | | | Unit | Ex.18 | Ex.19 | Ex.20 | Ex.21 | Ex.22 | Ex.23 | Ex.24 |
|---|---|---|---|---|---|---|---|---|---|---|
| Composition | Others | IRS | mol% | | | | | 0.02 | | |
| | | IRX | mol% | | | | 0.01 | | | |
| | | PEP | mol% | | | | | | 0.03 | 0.03 |
| | | TM | mol% | | | | | | | |
| | | VP | mol% | | | | 0.2 | 0.1 | 0.2 | 0.2 |
| | | UV | mol% | | | | | | | |
| | | VB | mol% | | | | 0.00005 | | 0.00007 | 0.00007 |
| Properties of materials | Transparency | | | ○ | ○ | ○ | ○ | ○ | ○ | ○ |
| | Appearance | | | ○ | ○ | ○ | ○ | ○ | ○ | ○ |
| | Flame retardancey 2.2mmt | rank | - | V-0 | V-0 | V-0 | V-0 | V-0 | V-0 | V-0 |
| | Flame retardancey 1.5mmt | rank | - | V-0 | V-0 | V-0 | V-0 | V-0 | V-0 | V-0 |
| | Flame retardancey 1.2mmt | rank | - | V-0 | V-0 | V-0 | V-0 | V-0 | V-0 | V-0 |

Ex.: Example

Table 3 (continued)

| | | | Unit | Ex.25 | Ex.26 | Ex.27 | Ex.28 | Ex.29 | Ex.30 |
|---|---|---|---|---|---|---|---|---|---|
| Composition | Component A-1 | PC- B9H | pbw | 100 | 100 | 100 | | | |
| | | PC- B9L | pbw | | | | 100 | 100 | 100 |
| | | PC- B7 | pbw | | | | | | |
| | | PC- B12 | pbw | | | | | | |
| | | PC- B6 | pbw | | | | | | |
| | | PC- B2 | pbw | | | | | | |
| | Component A-2 | PC- L1 | pbw | | | | | | |
| | | PC- L2 | pbw | | | | | | |
| | | PC- L3 | pbw | | | | | | |
| | Total of components A | | pbw | 100 | 100 | 100 | 100 | 100 | 100 |
| | Branching ratio of component A | | mol% | 0.97 | 0.97 | 0.97 | 0.95 | 0.95 | 0.95 |
| | Component C | C-1 | mol% | 0.024 | 0.024 | 0.024 | 0.024 | 0.050 | 0.080 |
| | | C-2 | mol% | | | | | | |
| | | C-3 | mol% | | | | | | |
| | Component B | B-1 | mol% | 0.50 | 1.00 | 2.00 | 1.00 | 0.50 | 1.00 |
| | | B-2 | mol% | | | | | | |
| | | B-3 | mol% | | | | | | |
| | | B-4 | mol% | | | | | | |
| | | B-5 | mol% | | | | | | |
| | | B-6 | mol% | | | | | | |

Ex.: Example pbw: parts by weight

Table 3 (continued)

| | | | Unit | Ex.25 | Ex.26 | Ex.27 | Ex.28 | Ex.29 | Ex.30 |
|---|---|---|---|---|---|---|---|---|---|
| Composition | Others | IRS | mol% | | | | | 0.01 | |
| | | IRX | mol% | 0.01 | 0.01 | 0.03 | | | |
| | | PEP | mol% | | | | | | 0.03 |
| | | TM | mol% | | | | 0.01 | | |
| | | VP | mol% | 0.2 | | | 0.3 | | |
| | | UV | mol% | | 0.3 | 0.27 | | | |
| | | VB | mol% | 0.00007 | 0.0001 | 0.0001 | 0.00007 | 0.00007 | 0.00005 |
| Properties of materials | Transparency | | | ○ | ○ | ○ | ○ | ○ | ○ |
| | Appearance | | | ○ | ○ | ○ | ○ | ○ | ○ |
| | Flame retardancey 2.2mmt | rank | - | V-0 | V-0 | V-0 | V-0 | V-0 | V-0 |
| | Flame retardancey 1.5mmt | rank | - | V-0 | V-0 | V-0 | V-0 | V-0 | V-0 |
| | Flame retardancey 1.2mmt | rank | — | V-1 | V-0 | V-0 | V-2 | V-2 | V-2 |

Ex.: Example

Table 4

| | | | Unit | Ex.31 | Ex.32 | Ex.33 | Ex.34 | Ex.35 | Ex.36 | Ex.37 |
|---|---|---|---|---|---|---|---|---|---|---|
| Composition | Component A-1 | PC- B15H-a | pbw | | | | | | | |
| | | PC- B14H-a | pbw | 100 | 100 | | | | | |
| | | PC- B14L-a | pbw | | | 100 | 100 | | | |
| | | PC- B12L-a | pbw | | | | | 100 | 100 | 100 |
| | | PC- B9H-a | pbw | | | | | | | |
| | | PC- B9L-a | pbw | | | | | | | |
| | | PC- B7H-a | pbw | | | | | | | |
| | | PC- B7L-a | pbw | | | | | | | |
| | | PC- B6H-a | pbw | | | | | | | |
| | Component A-2 | PC- L1 | pbw | | | | | | | |
| | Total of components A | | pbw | 100 | 100 | 100 | 100 | 100 | 100 | 100 |
| | Branching ratio of component A | | mol% | 1.46 | 1.46 | 1.46 | 1.46 | 1.27 | 1.27 | 1.27 |
| | Component B | B-1 | pbw | 0.05 | 1.0 | 0.5 | 0.5 | 0.5 | 0.5 | 0.5 |
| | | B-2 | pbw | | | | | | | |
| | | B-3 | pbw | | | | | | | |
| | Component C | C-1 | pbw | 0.050 | | 0.024 | 0.050 | 0.050 | 0.050 | 0.050 |
| | | C-2 | pbw | | 0.005 | | | | | |
| | Component D | D-1 | pbw | | | | | | | |
| | | D-2 | pbw | | 0.20 | | | | | |
| | | D-3 | pbw | 1.0 | | 1.0 | 1.0 | 1.0 | 0.005 | 0.2 |
| | | D-4 | pbw | | | | | | | |
| | Component E | E-1 | pbw | 0.15 | | 0.15 | 0.15 | 0.15 | 0.15 | 0.15 |
| | Component F | F-1 | pbw | 0.002 | | 0.002 | 0.002 | 0.002 | 0.002 | 0.002 |

Ex.: Example pbw: parts by weight

Table 4 (continued)

| | | | Unit | Ex.31 | Ex.32 | Ex.33 | Ex.34 | Ex.35 | Ex.36 | Ex.37 |
|---|---|---|---|---|---|---|---|---|---|---|
| Composition | others | PEPQ | pbw | | | | | 0.03 | 0.03 | |
| | | IRX | pbw | | | | | 0.03 | 0.03 | |
| | | L1 | pbw | | | | | | | 0.2 |
| | | SN3305 | pbw | | | | | | | |
| Evaluation | Flame retardancey 2.2mmt | rank | — | V-0 | V-0 | V-0 | V-0 | V-0 | V-0 | V-0 |
| | Flame retardancey 1.5mmt | rank | — | V-0 | V-0 | V-0 | V-0 | V-0 | V-0 | V-0 |
| | Flame retardancey 1.2mmt | Total light transmittance | % | 75 | 77 | 75 | 75 | 75 | 90 | 88 |
| | | Diffuse light transmittance | % | 75 | 70 | 75 | 75 | 75 | 6 | 77 |
| | | Diffusivity | ° | 24 | 2 | 24 | 24 | 24 | 1.5 | 2 |
| | | Surface emitting property | — | ○ | ○ | ○ | ○ | ○ | ○ | ○ |
| | | Appearance of surface | — | ○ | ○ | ○ | ○ | ○ | ○ | ○ |

Ex.: Example pbw: parts by weight

Table 4 (continued)

| | | | Unit | Ex.38 | Ex.39 | Ex.40 | Ex.41 | Ex.42 | Ex.43 | Ex.44 |
|---|---|---|---|---|---|---|---|---|---|---|
| Composition | Component A-1 | PC- B15H-a | pbw | | | | | | | |
| | | PC- B14H-a | pbw | | | | | | | |
| | | PC- B14L-a | pbw | | | | | | | |
| | | PC- B12L-a | pbw | 100 | 100 | 100 | | | | |
| | | PC- B9H-a | pbw | | | | 100 | 100 | 100 | 100 |
| | | PC- B9L-a | pbw | | | | | | | |
| | | PC- B7H-a | pbw | | | | | | | |
| | | PC- B7L-a | pbw | | | | | | | |
| | | PC- B6H-a | pbw | | | | | | | |
| | Component A-2 | PC- L1 | pbw | | | | | | | |
| | Total of components A | | pbw | 100 | 100 | 100 | 100 | 100 | 100 | 100 |
| | Branching ratio of component A | | mol% | 1.27 | 1.27 | 1.27 | 0.96 | 0.96 | 0.96 | 0.96 |
| | Component B | B-1 | pbw | 0.5 | 0.5 | | 0.5 | 0.5 | 0.5 | 0.5 |
| | | B-2 | pbw | | | | | | | |
| | | B-3 | pbw | | | 1.0 | | | | |
| | Component C | C-1 | pbw | 0.050 | 0.050 | 0.050 | 0.050 | 0.050 | 0.050 | 0.050 |
| | | C-2 | pbw | | | | | | | |
| | Component D | D-1 | pbw | | | | | | | |
| | | D-2 | pbw | | | | | | | |
| | | D-3 | pbw | 0.6 | 1.0 | 1.0 | 0.005 | 0.2 | 0.6 | 1.0 |
| | | D-4 | pbw | | | | | | | |
| | Component E | E-1 | pbw | 0.15 | 0.15 | 0.15 | 0.15 | 0.15 | 0.15 | 0.15 |
| | Component F | F-1 | pbw | 0.002 | 0.002 | 0.002 | 0.002 | 0.002 | 0.002 | 0.002 |

Ex.: Example pbw: parts by weight

Table 4 (continued)

| | | | Unit | Ex.38 | Ex.39 | Ex.40 | Ex.41 | Ex.42 | Ex.43 | Ex.44 |
|---|---|---|---|---|---|---|---|---|---|---|
| Composition | Others | PEPQ | pbw | 0.03 | 0.03 | | 0.03 | 0.03 | 0.03 | 0.03 |
| | | IRX | pbw | 0.03 | 0.03 | | 0.03 | 0.03 | 0.03 | 0.03 |
| | | L1 | pbw | | | | | | | |
| | | SN3305 | pbw | | | | | | | |
| Evaluation | Flame retardancey 2.2mmt | Rank | — | V-0 | V-0 | V-0 | V-0 | V-0 | V-0 | V-0 |
| | Flame retardancey 1.5mmt | Rank | — | V-0 | V-0 | V-0 | V-0 | V-0 | V-0 | V-0 |
| | Flame retardancey 1.2mmt | Total light transmittance | % | 82 | 75 | 75 | 90 | 88 | 82 | 75 |
| | | Diffuse light transmittance | % | 80 | 75 | 75 | 6 | 77 | 80 | 75 |
| | | Diffusivity | ° | 17 | 24 | 24 | 1.5 | 2 | 17 | 24 |
| | | Surface emitting property | — | ○ | ○ | ○ | ○ | ○ | ○ | ○ |
| | | Appearance of surface | — | ○ | ○ | ○ | ○ | ○ | ○ | ○ |

Ex.: Example pbw: parts by weight

Table 5

| | | | Unit | Ex. 45 | Ex.46 | Ex.47 | Ex.48 | Ex.49 | Ex.50 | Ex.51 |
|---|---|---|---|---|---|---|---|---|---|---|
| Composition | Component A-1 | PC- B15H-a | pbw | | | | | | | |
| | | PC- B1H-a | pbw | | | | | | | |
| | | PC- B14L-a | pbw | | | | | | | |
| | | PC- B12L-a | pbw | | | | | | | |
| | | PC- B9H-a | pbw | 100 | 100 | | | | | |
| | | PC- B9L-a | pbw | | | 100 | 100 | | | |
| | | PC- B7H-a | pbw | | | | | 100 | 100 | 100 |
| | | PC- B7L-a | pbw | | | | | | | |
| | | PC- B6H-a | pbw | | | | | | | |
| | Component A-2 | PC- L1 | pbw | | | | | | | |
| | Total of components A | | pbw | 100 | 100 | 100 | 100 | 100 | 100 | 100 |
| | Branching ratio of component A | | mol% | 0.96 | 0.96 | 0.91 | 0.91 | 0.72 | 0.72 | 0.72 |
| | Component B | B-1 | pbw | 0.5 | 0.5 | 1.0 | 1.0 | 1.0 | 1.0 | |
| | | B-2 | pbw | | | | | | | 1.0 |
| | | B-3 | pbw | | | | | | | |
| | Component C | C-1 | pbw | 0.050 | 0.050 | 0.050 | 0.050 | 0.050 | 0.050 | 0.050 |
| | | C-2 | pbw | | | | | | | |
| | Component D | D-1 | pbw | | | | 0.20 | 0.80 | | |
| | | D-2 | pbw | | | | | | | |
| | | D-3 | pbw | 1.0 | | 1.0 | | | 1.0 | 1.0 |
| | | D-4 | pbw | | 2.0 | | | | | |
| | Component E | E-1 | pbw | 0.27 | 0.27 | 0.27 | 0.27 | 0.27 | 0.27 | 0.27 |
| | Component F | F-1 | pbw | 0.002 | 0.002 | 0.002 | 0.002 | 0.002 | 0.002 | 0.002 |

Ex.: Example pbw: parts by weight

Table 5 (continued)

| | | | Unit | Ex.45 | Ex.46 | Ex.47 | Ex.48 | Ex.49 | Ex.50 | Ex.51 |
|---|---|---|---|---|---|---|---|---|---|---|
| Composition | others | PEPQ | pbw | 0.03 | 0.03 | | 0.03 | 0.03 | | |
| | | IRX | pbw | 0.03 | 0.03 | | 0.03 | 0.03 | | |
| | | L1 | pbw | | | | | | | |
| | | SN3305 | pbw | | | | | | | |
| Evaluation | Flame retardancey 2.2mmt | Rank | — | V-0 | V-0 | V-0 | V-0 | V-0 | V-0 | V-0 |
| | Flame retardancey 1.5mmt | Rank | — | V-0 | V-0 | V-0 | V-0 | V-0 | V-0 | V-0 |
| | Flame retardancey 2mmt | Total light transmittance | % | 75 | 82 | 75 | 75 | 50 | 75 | 75 |
| | | Diffuse light transmittance | | 75 | 70 | 75 | 74 | 50 | 75 | 75 |
| | | Diffusivity | ° | 24 | 2 | 24 | 3 | 58 | 24 | 24 |
| | | Surface emitting property | — | ○ | ○ | ○ | ○ | ○ | ○ | ○ |
| | | Appearance of surface | — | ○ | ○ | ○ | ○ | ○ | ○ | ○ |

Ex.: Example pbw: parts by weight

Table 5 (continued)

| | | | Unit | Ex.52 | Ex.53 | Ex.54 | Ex.55 | Ex.56 | Ex.57 |
|---|---|---|---|---|---|---|---|---|---|
| Composition | Component A-1 | PC- B15H-a | pbw | | | | | | |
| | | PC- B14H-a | pbw | | | | | | |
| | | PC- B14L-a | pbw | | | | | | |
| | | PC- B12L-a | pbw | | | | | | |
| | | PC- B9H-a | pbw | | | | | | |
| | | PC- B9L-a | pbw | | | | | | 100 |
| | | PC- B7H-a | pbw | | | | | | |
| | | PC- B7L-a | pbw | 100 | 100 | 100 | 70 | 100 | |
| | | PC- B6H-a | pbw | | | | | | |
| | Component A-2 | PC- L1 | pbw | | | | 30 | | |
| | Total of components A | | pbw | 100 | 100 | 100 | 100 | 100 | 100 |
| | Branching ratio of component A | | mol% | 0.74 | 0.74 | 0.74 | 0.52 | 0.74 | 0.91 |
| | Component B | B-1 | pbw | | 1.0 | 1.0 | 1.0 | 0.05 | 1.0 |
| | | B-2 | pbw | | | | | | |
| | | B-3 | pbw | 1.0 | | | | | |
| | Component C | C-1 | pbw | 0.050 | 0.100 | 0.070 | 0.050 | 0.9 | 0.050 |
| | | C-2 | pbw | | | | | | |
| | Component D | D-1 | pbw | | | | | | |
| | | D-2 | pbw | | | | | | |
| | | D-3 | pbw | 1.0 | 1.0 | 1.0 | 1.0 | 1.0 | 1.0 |
| | | D-4 | pbw | | | | | | |
| | Component E | E-1 | pbw | 0.27 | 0.27 | 0.27 | 0.27 | 0.27 | 0.27 |
| | Component F | F-1 | pbw | 0.002 | 0.002 | 0.002 | 0.002 | 0.002 | 0.002 |

Ex.: Example pbw: parts by weight

Table 5 (continued)

| | | | Unit | Ex.52 | Ex.53 | Ex.54 | Ex.55 | Ex.56 | Ex.57 |
|---|---|---|---|---|---|---|---|---|---|
| Composition | Others | PEPQ | pbw | | 0.03 | 0.03 | 0.03 | 0.03 | 0.03 |
| | | IRX | pbw | | 0.03 | 0.03 | 0.03 | 0.03 | 0.03 |
| | | L1 | pbw | | | | | | |
| | | SN3305 | pbw | | | | | | 0.1 |
| Evaluation | Flame retardancey 2.2mmt | Rank | — | V-0 | V-0 | V-0 | V-0 | V-0 | V-0 |
| | Flame retardancey 1.5mmt | Rank | — | V-0 | V-0 | V-0 | V-0 | V-0 | V-0 |
| | Flame retardancey 2mmt | Total light transmittance | % | 75 | 75 | 75 | 75 | 75 | 70 |
| | | Diffuse light transmittance | | 75 | 75 | 75 | 75 | 75 | 75 |
| | | Diffusivity | ° | 24 | 24 | 24 | 24 | 24 | 24 |
| | | Surface emitting property | — | ○ | ○ | ○ | ○ | ○ | ○ |
| | | Appearance of surface | — | ○ | ○ | ○ | ○ | ○ | ○ |

Ex.: Example pbw: parts by weight

Table 6

| | | | Unit | C.Ex.7 | C.Ex.8 | C.Ex.9 | C.Ex.10 | C.Ex.11 |
|---|---|---|---|---|---|---|---|---|
| Composition | Component A-1 | PC- B15H-a | pbw | 100 | | | | |
| | | PC- B14H-a | pbw | | | | | |
| | | PC- B14L-a | pbw | | | | | |
| | | PC- B12L-a | pbw | | 100 | 100 | 100 | |
| | | PC- B9H-a | pbw | | | | | |
| | | PC- B9L-a | pbw | | | | | |
| | | PC- B7H-a | pbw | | | | | |
| | | PC- B7L-a | pbw | | | | | |
| | | PC- B6H-a | pbw | | | | | 100 |
| | Component A-2 | PC- L1 | pbw | | | | | |
| | Total of components A | | pbw | 100 | 100 | 100 | 100 | 100 |
| | Branching ratio of component A | | mol% | 1.52 | 1.27 | 1.27 | 1.27 | 0.67 |
| | Component B | B-1 | pbw | 0.50 | 0.50 | 0.50 | 4.0 | 0.50 |
| | | B-2 | pbw | | | | | |
| | | B-3 | pbw | | | | | |
| | Component C | C-1 | pbw | 0.050 | 0.050 | 2.00 | 0.050 | 0.050 |
| | | C-2 | pbw | | | | | |
| | Component D | D-1 | pbw | | | | | |
| | | D-2 | pbw | | | | | |
| | | D-3 | pbw | 1.0 | 7.0 | 1.0 | 1.0 | 1.0 |
| | | D-4 | pbw | | | | | |
| | Component E | E-1 | pbw | 0.27 | 0.27 | 0.27 | 0.27 | 0.27 |
| | Component F | F-1 | pbw | 0.002 | 0.002 | 0.002 | 0.002 | 0.002 |

C.Ex.: Comparative Example pbw: parts by weight

Table 6 (continued)

| | | | Unit | C.Ex.7 | C.Ex.8 | C.Ex.9 | C.Ex.10 | C.Ex.11 |
|---|---|---|---|---|---|---|---|---|
| Composition | Others | PEPQ | pbw | 0.03 | 0.03 | 0.03 | 0.03 | 0.03 |
| | | IRX | pbw | 0.03 | 0.03 | 0.03 | 0.03 | 0.03 |
| | | L1 | pbw | | | | | |
| | | SN3305 | pbw | | | | | |
| Evaluation | Flame retardancey 2.2mmt | Rank | — | V-0 | V-0 | V-2 | V-0 | V-2 |
| | Flame retardancey 1.5mmt | Rank | — | V-0 | V-0 | V-2 | V-0 | V-2 |
| | Flame retardancey 2mmt | Total light transmittance | % | 75 | 35 | 70 | 50 | 75 |
| | | Diffuse light transmittance | | 75 | 35 | 70 | 50 | 75 |
| | | Diffusivity | ° | 24 | 60 | 24 | 24 | 24 |
| | | Surface emitting property | — | ○ | × | ○ | △ | ○ |
| | | Appearance of surface | — | × | ○ | ○ | × | ○ |

C.Ex.: Comparative Example pbw: parts by weight

Table 6 (continued)

| | | | Unit | C.Ex.12 | C.Ex.13 | C.Ex.14 | C.Ex.15 |
|---|---|---|---|---|---|---|---|
| Composition | Component A-1 | PC- B15H-a | pbw | | | | |
| | | PC- B14H-a | pbw | | | | |
| | | PC- B14L-a | pbw | | | | |
| | | PC- B12L-a | pbw | | 100 | 100 | 100 |
| | | PC- B9H-a | pbw | | | | |
| | | PC- B9L-a | pbw | | | | |
| | | PC- B7H-a | pbw | | | | |
| | | PC- B7L-a | pbw | | | | |
| | | PC- B6H-a | pbw | | | | |
| | Component A-2 | PC- L1 | pbw | 100 | | | |
| | Total of components A | | Pbw | 100 | 100 | 100 | 100 |
| | Branching ratio of component A | | mol% | 0 | 1.27 | 1.27 | 1.27 |
| | Component B | B-1 | pbw | 0.50 | 0.50 | 0.01 | 0.50 |
| | | B-2 | pbw | | | | |
| | | B-3 | pbw | | | | |
| | Component C | C-1 | pbw | 0.050 | 0.050 | 0.050 | 0.001 |
| | | C-2 | pbw | | | | |
| | Component D | D-1 | pbw | | | | |
| | | D-2 | pbw | | | | |
| | | D-3 | pbw | 1.0 | 0.001 | 1.0 | 1.0 |
| | | D-4 | pbw | | | | |
| | Component E | E-1 | pbw | 0.27 | 0.27 | 0.27 | 0.27 |
| | Component F | F-1 | pbw | 0.002 | 0.002 | 0.002 | 0.002 |

C.Ex.: Comparative Example pbw: parts by weight

Table 6 (continued)

| | | | Unit | C.Ex.12 | C.Ex.13 | C.Ex.14 | C.Ex.15 |
|---|---|---|---|---|---|---|---|
| Composition | Others | PEPQ | pbw | 0.03 | 0.03 | 0.03 | 0.03 |
| | | IRX | pbw | 0.03 | 0.03 | 0.03 | 0.03 |
| | | L1 | pbw | | | | |
| | | SN3305 | pbw | | | | |
| Evaluation | Flame retardancey 2.2mmt | Rank | — | V-2 | V-0 | V-2 | V-2 |
| | Flame retardancey 1.5mmt | Rank | — | V-2 | V-0 | V-2 | V-2 |
| | Flame retardancey 2mmt | Total light transmittance | % | 75 | 90 | 75 | 75 |
| | | Diffuse light transmittance | | 75 | 5 | 75 | 75 |
| | | Diffusivity | ° | 24 | 0.5 | 24 | 24 |
| | | Surface emitting property | — | ○ | × | ○ | ○ |
| | | Appearance of surface | — | ○ | ○ | ○ | ○ |

C.Ex.: Comparative Example pbw: parts by weight

As is clear from the foregoing, the extrusion-molded product from the resin composition of this invention mainly contains a polycarbonate resin having a branched structure of which the branching ratio is limited to a narrow range and a flame retardant, and is excellent in transparency, appearance and mechanical properties. These properties are those which are not found in extrusion-molded products from conventional polycarbonate resins. Therefore, the extrusion-molded product of this invention is very useful not only in the fields of lighting covers, (protective) covers for transmissive displays and covers for front plates of TV sets, but also in the fields of various industries such as OA machines and equipment, electric and electronic equipment and apparatuses and construction materials, and it produces very significant industrial effects.

Effect of the Invention

The extrusion-molded product of this invention contains an aromatic polycarbonate resin having a specified branching ratio (component A) and a flame retardant and is excellent in flame retardancy, transparency, appearance and mechanical properties.
The extrusion-molded product formed from a resin composition containing an aromatic polycarbonate resin having a specified branching ratio (component A), a silicone compound having an aromatic group (component B), an alkali (alkaline earth) metal salt (component C) and a light diffusing agent (component D) in this invention can be improved in flame retardancy and surface appearance with maintaining a high light transmittance and diffusing capability since the contents of the component B and component C are limited to unconventionally narrow ranges.

Industrial Applicability

The extrusion-molded product of this invention is very useful not only in the fields of in the fields of lighting covers, (protective) covers for transmissive displays and covers for front plates of TV sets, but in the fields of various industries such as OA machines and equipment, electric and electronic equipment and apparatuses and construction materials. The extrusion-molded product containing a light diffusing agent (component D) in this invention is useful as a light guide plate, a surface emitting structure, a light diffusing plate and a lighting cover.

## Claims

1. An extrusion-molded product formed from a resin composition comprising 100 parts by weight of an aromatic polycarbonate resin having a branched structure and a branching ratio of 0.7 to 1.5 mol% (component A) and 0.005 to 5 parts by weight of a flame retardant.

2. The extrusion-molded product of claim 1, wherein the flame retardant is at least one flame retardant selected from the group consisting of a silicone compound having an aromatic group (component B) and an alkali (earth) metal salt (component C).

3. An extrusion-molded product which is formed from the resin composition of claim 2, where the component B is a silicone compound having an Si-H group in a molecule.

4. An extrusion-molded product formed from the resin composition of claim 2, wherein the component C is at least one member selected from the group consisting of perfluoroalkylsulfonic acid alkali (earth) metal salt, aromatic sulfonic acid alkali (earth) metal salt and alkali (earth) metal salt of aromatic imide.

5. An extrusion-molded product of claim 2, which is formed from the resin composition containing 0.05 to 2.0 parts by weight of the component B per 100 parts by weight of the component A.

6. The extrusion-molded product of claim 2, which is formed from the resin composition containing 0.005 to 1.0 part by weight of the component C per 100 parts by weight of the component A.

7. The extrusion-molded product of claim 1, which is formed from the resin composition containing 0.005 to 3.0 parts by weight of a light-diffusing agent (component D) per 100 parts by weight of the component A.

8. An extrusion-molded product formed from the resin composition of claim 7, wherein the component D is of polymer fine particles.

**9.** An extrusion-molded product formed from the resin composition of claim 1 which contains 0.01 to 3 parts by weight of an ultraviolet absorbent (component E) per 100 parts by weight of the component A.

**10.** An extrusion-molded product formed from the resin composition of claim 1 which contains 0.001 to 0.1 part by weight of a fluorescent brightener (component F) per 100 parts by weight of the component A.

**11.** An extrusion-molded product formed from the resin composition of claim 1, which satisfies a flame retardancy level of V-0 according to UL94 standard as a 1.5 mm thick molded product.

**12.** The extrusion-molded product of claim 1, which is an extrusion sheet, an extrusion shaped sheet or an extrusion sheet of a special form.

**13.** The extrusion-molded product of claim 1, which is an lighting cover or a cover for a transmissive display.

Fig. 1

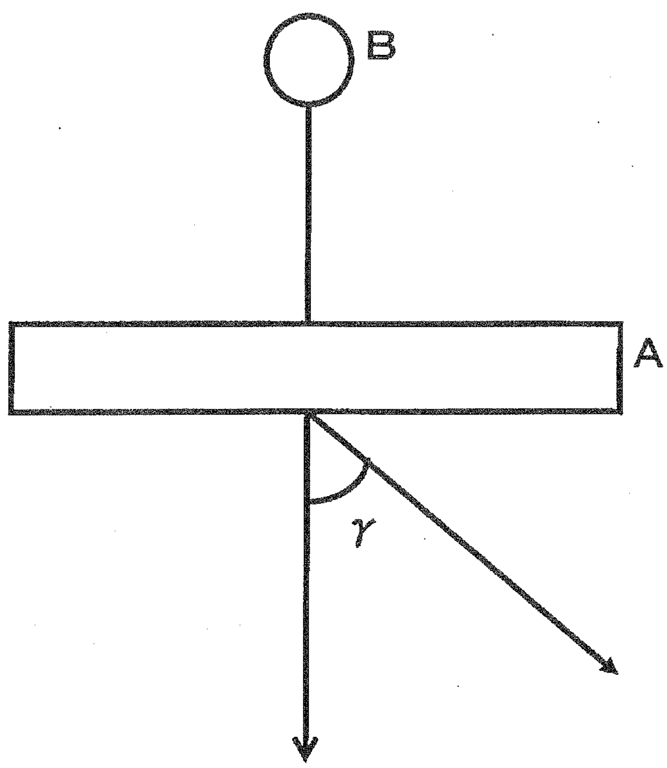

**INTERNATIONAL SEARCH REPORT**

International application No.
PCT/JP2010/070156

A. CLASSIFICATION OF SUBJECT MATTER
*C08L69/00*(2006.01)i, *B29C47/00*(2006.01)i, *C08K5/42*(2006.01)i, *C08K5/54* (2006.01)i, *B29K69/00*(2006.01)n

According to International Patent Classification (IPC) or to both national classification and IPC

B. FIELDS SEARCHED

Minimum documentation searched (classification system followed by classification symbols)
C08L69/00, B29C47/00, C08K5/42, C08K5/54, B29K69/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2003-147190 A (Teijin Chemicals Ltd.), 21 May 2003 (21.05.2003), claims; paragraphs [0002], [0020] to [0022], [0071], [0074] to [0091], [0094], [0173]; examples & US 2003/0158309 A1 & EP 1288262 A2 & DE 60206575 T | 1-13 |
| X | JP 2005-200526 A (Teijin Chemicals Ltd.), 28 July 2005 (28.07.2005), claims; paragraphs [0035] to [0037], [0080] to [0098], [0105], [0106], [0135] to [0140], [0158]; examples (Family: none) | 1-13 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 05 January, 2011 (05.01.11) | 18 January, 2011 (18.01.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No. PCT/JP2010/070156

C (Continuation). DOCUMENTS CONSIDERED TO BE RELEVANT

| Category* | Citation of document, with indication, where appropriate, of the relevant passages | Relevant to claim No. |
|---|---|---|
| X | JP 2007-31583 A (Teijin Chemicals Ltd.), 08 February 2007 (08.02.2007), claims; paragraphs [0002], [0116], [0117], [0154] to [0161], [0183]; examples (Family: none) | 1-13 |
| X | JP 2006-249292 A (Teijin Chemicals Ltd.), 21 September 2006 (21.09.2006), claims; paragraphs [0001], [0031], [0032], [0092] to [0202]; examples (Family: none) | 1-13 |
| A | JP 6-306265 A (Idemitsu Petrochemical Co., Ltd.), 01 November 1994 (01.11.1994), entire text (Family: none) | 1-13 |
| A | JP 6-336547 A (Idemitsu Petrochemical Co., Ltd.), 06 December 1994 (06.12.1994), entire text & US 5449710 A & EP 625547 A1 | 1-13 |
| A | JP 3129374 B1 (Idemitsu Petrochemical Co., Ltd.), 17 November 2000 (17.11.2000), entire text (Family: none) | 1-13 |
| A | JP 3163596 B1 (Idemitsu Petrochemical Co., Ltd.), 02 March 2001 (02.03.2001), entire text (Family: none) | 1-13 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6306265 A
- JP 6336547 A
- JP 9169914 A
- JP 10139964 A
- JP 60038419 B
- JP 2003147190 A
- JP 3129374 B
- JP 3163596 B
- JP 2007031583 A
- JP 50098539 A
- JP 50098540 A
- JP 50098542 A
- JP 50098544 A
- JP 50098546 A
- JP 52054746 A
- JP 50098547 A
- JP 50116542 A
- JP 52054745 A
- JP 7233160 A